# EUROPÄISCHE PATENTSCHRIFT

(11) **EP 0 574 790 B1**
(45) Veröffentlichungstag und Bekanntmachung des Hinweises auf die Patenterteilung: **13.05.1998**
(21) Anmeldenummer: 93109138.3
(22) Anmeldetag: 07.06.1993
(51) Int. Cl.: C09B 67/12, C09B 67/22, C09B 67/04, C08K 5/34, C09D 7/12, C09D 11/02

(54) **Verfahren zur Herstellung von Pigmentzubereitungen auf Basis von Phthalocyaninpigmenten**
Process for the manufacture of pigment compositions based on phthalocyanine pigments
Procédé de fabrication de compositions pigmentaires à base de pigments de phtalocyanine

(30) Priorität: 18.06.1992 DE 4219951
(43) Veröffentlichungstag der Anmeldung: 22.12.1993
(73) Patentinhaber: Clariant GmbH, 65929 Frankfurt am Main (DE)
(72) Erfinder: Dietz, Erwin, Dr., W-6233 Kelkheim/Ts. (DE); Urban, Manfred, W-6200 Wiesbaden (DE)

(56) Entgegenhaltungen:
- EP-A- 0 020 306
- FR-A- 2 270 305
- FR-A- 2 333 836
- FR-A- 2 349 627
- US-A- 2 556 727
- US-A- 3 758 321

## Beschreibung

Die vorliegende Erfindung liegt auf dem technischen Gebiet der Phthalocyaninpigmente und betrifft ein umweltfreundliches und wirtschaftliches Verfahren zur Herstellung von Pigmentzubereitungen auf Basis von Phthalocyaninpigmenten sowohl der α- als auch der β-Phase.

Phthalocyaninpigmente und daraus hergestellte Pigmentzubereitungen sind seit langem bekannt. Phthalocyaninpigmente werden durch Feinverteilungs- und Finishverfahren aus den bei der Synthese anfallenden grobkristallinen Rohpigmenten hergestellt. Solche Feinverteilungs- und Finishverfahren sind beispielsweise Acidpasting-, Trockenmahl- und Naßmahlverfahren. Auch Kombinationen dieser Verfahren werden beschrieben. Zur Verbesserung der Reinheit und der Nuance ist es in einigen Fällen erforderlich, vor der Feinverteilung die Rohpigmente durch Umlösen mit Schwefelsäure zu reinigen.
Pigmentdispergatoren zur Herstellung von Pigmentzubereitungen auf Basis von Phthalocyaninpigmenten sind ebenfalls seit langem bekannt.
Die US-PS 2 526 345 beschreibt die Herstellung von Pigmentzubereitungen auf Basis von sulfonsäuregruppenhaltigen Phthalocyaninverbindungen. Die US-PS 3 028 392 beschreibt die Herstellung von Pigmentzubereitungen auf Basis von carboxylgruppenhaltigen Kupferphthalocyaninverbindungen.
Die US-PS 2 861 005 beschreibt die Herstellung von Pigmentzubereitungen auf Basis von sulfonamidgruppenhaltigen Kupferphthalocyaninverbindungen.
Die DE-A 1 239 270 (GB-A 949 739) beschreibt die Herstellung von Pigmentzubereitungen auf Basis von methylaminogruppenhaltigen Phthalocyaninverbindungen. Die US-PS 2 855 403 beschreibt die Herstellung von Pigmentzubereitungen auf Basis von phthalimidomethylengruppenhaltigen Phthalocyaninverbindungen.
Die Überführung der grobkristallinen Rohpigmente in die Pigmentform ist in den nachfolgend aufgeführten Druckschriften beschrieben:
Die DE-A 2 439 983 (GB-A 1 502 884) beschreibt ein Naßmahlverfahren zur Herstellung von Pigmentzubereitungen auf Basis von Phthalocyaninpigmenten der β-Phase durch Lösemittelmahlung von gereinigten Phthalocyaninrohpigmenten in Gegenwart von Pigmentdispergatoren. Wegen der extrem langen Mahlzeiten und der großen Lösungsmittelverluste bei der Mahlung ist dieses Verfahren unwirtschaftlich und ökologisch bedenklich. Außerdem genügen die coloristischen Eigenschaften nicht mehr den Anforderungen, die heute in der Praxis an hochechte Pigmente gestellt werden.
Die US-PS 2 816 115 beschreibt die Herstellung von Kupferphthalocyaninpigmenten der β-Phase durch wäßrige Perlmahlung in Gegenwart von oberflächenaktiven Substanzen. Die erhaltenen Pigmente genügen jedoch nicht den Anforderungen, die heute in der Praxis an hochechte Pigmente gestellt werden.
Die US-PS 3 775 149 beschreibt ein Naßmahlverfahren von grobkristallinen Kupferphthalocyaninrohpigmenten auf einer Roll- oder Perlmühle in Gegenwart von 5 bis 10 % oberflächenaktiven Substanzen. Wegen der extrem langen Mahlzeiten ist dieses Verfahren unwirtschaftlich. Hinsichtlich der coloristischen Eigenschaften genügen diese Pigmente nicht mehr den Anforderungen, die heute in der Praxis an hochechte Pigmente gestellt werden.
Die US-PS 4 024 154 beschreibt ein zweistufiges Trocken- und Naßmahlverfahren zur Herstellung von Kupferphthalocyaninpigmenten. Hierbei wird das grobkristalline Rohpigment in einer Rollmühle trocken vorvermahlen und anschließend in einer Rollmühle in Gegenwart von geringen Mengen eines aliphatischen Kohlenwasserstoffs wäßrig vermahlen. Aufgrund der extrem langen Mahlzeiten bei der Trockenmahlung und bei der Naßmahlung ist dieses Verfahren unwirtschaftlich. Außerdem wird in dieser Patentschrift beschrieben, daß durch alleinige wäßrige Mahlung keine brauchbaren Pigmente mit hochwertigen coloristischen Eigenschaften hergestellt werden können.

Die GB-A 1 091 906 beschreibt die Herstellung von Phthalocyaninpigmenten durch Naßmahlung von Rohphthalocyaninen in verdünnten organischen Säuren. Hierbei fallen große Mengen organischer Säuren in verdünnter Form an, die wieder aufbereitet werden müssen. Aus diesem Grund ist auch dieses Verfahren unwirtschaftlich. Nach den in dieser Patentschrift gemachten Angaben können durch Mahlung in Wasser mit kleinen Mahlkörpern wie Kies, Sand oder Perlen keine verwertbaren Pigmente hergestellt werden.

Die DE-A-24 21 804 beschreibt ein Verfahren zur Herstellung eines unsubstituierten Kupferphthalocyaninpigments der α-Phase durch Umlösen von Kupferphthalocyanin in Schwefelsäure und anschließender mechanischer Dispergierung in Wasser. Die zur Dispergierung eingesetzten Mahlvorrichtungen haben konstruktionsbedingt eine geringe Leistungsdichte und Umfangsgeschwindigkeit. Die so hergestellten Pigmente genügen nicht mehr den heutigen Anforderungen an hochechte Pigmente.

Der vorliegenden Erfindung lag die Aufgabe zugrunde, ein Verfahren zur Herstellung von Phthalocyaninpigmenten oder einer Zubereitung von Phthalocyaninpigmenten zur Verfügung zu stellen, das die vorstehend genannten Nachteile vermeidet und die genannten Pigmente unter Erhalt der α- oder β-Phase in einer solchen Form liefert, daß daraus Pigmentzubereitungen mit hervorragenden rheologischen und coloristischen Eigenschaften hergestellt werden können.

Diese Aufgabe wurde dadurch gelöst, daß man die bei der Synthese anfallenden oder die nach der Synthese mit Schwefelsäure gereinigten grobkristallinen Phthalocyaninrohpigmente in einem wäßrigen, wäßrig-organischen oder organischen Medium auf einer Rührwerkskugelmühle mit hoher Energiedichte und kleinen Mahlkörpern bis zum Erreichen eines bestimmten minimalen Feinverteilungsgrades der resultierenden Pigmentteilchen unter phasenerhaltenden Bedingungen naßvermahlt und die erhaltenen Mahlgutsuspensionen dann direkt, oder im Falle einer Zwischenisolierung nach deren Wiederaufnahme in einer inerten Flüssigkeit, vorzugsweise in Gegenwart von organischen Lösemitteln, einer üblichen Finishbehandlung bei erhöhter Temperatur aussetzt, wobei in einer bevorzugten Ausführungsform Pigmentdispergatoren der nachstehend definierten Formel (I) vor oder während der Naßvermahlung, während oder nach der Finishbehandlung oder in beiden genannten Behandlungsschritten zugegeben werden.

Gegenstand der vorliegenden Erfindung ist ein Verfahren zur Herstellung eines Phthalocyaninpigments oder einer Pigmentzubereitung auf Basis eines Phthalocyaninpigments unter Erhalt der Phase des eingesetzten Phthalocyaninrohpigments, dadurch gekennzeichnet, daß man ein Phthalocyaninrohpigment,
a) zunächst in einem inerten flüssigen Medium in einer Rührwerkskugelmühle, die mit einer Leistungsdichte von mehr als 2,5 kW pro Liter Mahlraum und einer Rührwerksumfangsgeschwindigkeit von mehr als 12 m/s betrieben wird, unter der Einwirkung von Mahlkörpern mit einem Durchmesser kleiner als 1 mm naßvermahlt, wobei das inerte flüssige Medium im Falle von Phthalocyaninpigmenten der β-Phase oder der halogenierten Phthalocyaninpigmente ein organisches oder wäßrig-organisches Medium, und im Falle von Phthalocyaninpigmenten der α-Phase ein wäßriges, wäßrig-organisches oder organisches Medium, das frei von aromatenhaltigen Lösemitteln ist, bedeutet; anschließend
b) die nach a) erhaltene Präpigmentzusammensetzung entweder
   b1) in Form der so erhaltenen Mahlgutsuspension, oder
   b2) nach Zusatz eines organischen Lösemittels zu der nach a) erhaltenen Mahlgutsuspension oder
   b3) im Falle einer Zwischenisolierung des Präpigments oder der Präpigmentzusammensetzung nach vorheriger Wiederaufnahme in einem organischen Lösemittel einer Finishbehandlung bei erhöhter Temperatur unterwirft,
   und
c) anschließend das resultierende Pigment oder die Pigmentzubereitung isoliert.

Unter Isolieren wird üblicherweise das Abdestillieren des Lösemittels, Filtrieren und Waschen des Preßkuchens sowie anschließendes Trocknen und Mahlen des Pigments oder der Pigmentzubereitung verstanden.

In einer bevorzugten Ausführungsform des erfindungsgemäßen Verfahrens wird vor, während oder nach einem oder mehreren der Teilschritte a), b) und c) einmal oder mehrmals mindestens ein Pigmentdispergator der Formel (I) zugegeben,

P ― Xₘ (I)

in welcher
P für einen m-wertigen Rest auf Basis der Formel (II) 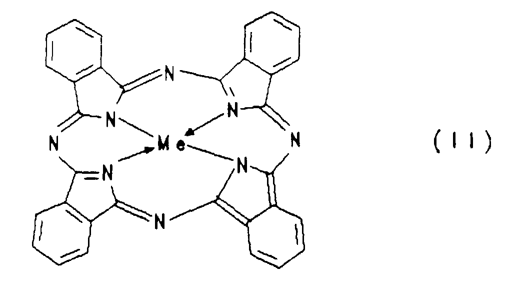 steht, worin
   m eine Zahl von 1 bis 6 ist,
   Me zwei Wasserstoffatome oder ein zweiwertiges Metallatom, vorzugsweise ein Kupfer-, Eisen-, Zink-, Nickel-, Kobalt- oder Zinnatom, insbesondere ein Kupferatom, bedeutet und
X eine Gruppe der Formel (IIIa)

   -COOM (IIIa)

   oder eine Gruppe der Formel (IIIb)

   -SO₃M (IIIb)

   darstellt, worin M ein Wasserstoffatom oder ein Äquivalent eines Alkali-, Erdalkali- oder Ammoniumions bedeutet oder worin
X eine Gruppe der Formel (IIIc) 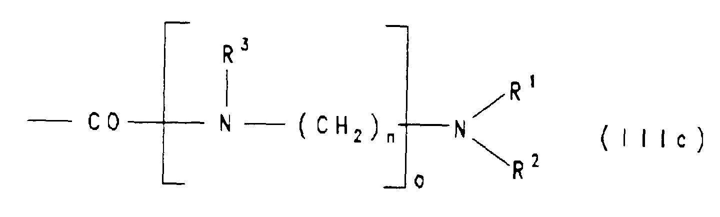 oder eine Gruppe der Formel (IIId) 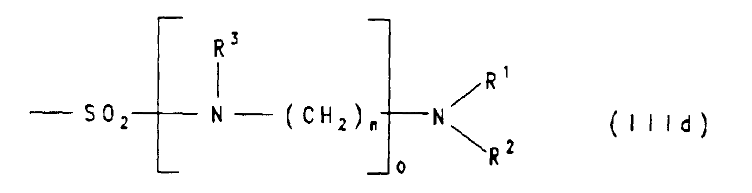 darstellt, worin R¹ und R² gleich oder verschieden sind und ein Wasserstoffatom, eine C₁-C₂₀-Alkyl-, C₂-C₂₀-Alkenylgruppe oder eine C₅-C₇-Cycloalkylgruppe, vorzugsweise ein Wasserstoffatom, eine Methyl- oder Ethylgruppe, bedeuten, oder worin R¹ und R² gemeinsam mit dem angrenzenden Stickstoffatom ein aliphatisches oder aromatisches, fünf- bis siebengliedriges heterocyclisches System mit jeweils 1 bis 3 ringangehörigen, gleichen oder unterschiedlichen Heteroatomen aus der Reihe Stickstoff, Sauerstoff oder Schwefel, vorzugsweise Imidazol, Piperidin, Piperazin, Pyrrolidin, Morpholin, Imidazolin oder Hexamethylenimin, bilden;
   R³ ein Wasserstoffatom oder eine C₁-C₄-Alkylgruppe, vorzugsweise ein Wasserstoffatom oder eine Methylgruppe, ist,
   n eine Zahl von 1 bis 6, vorzugsweise 2 oder 3,
   o die Zahl 0 oder 1, vorzugsweise 1, und
   m eine Zahl von 1 bis 4 sind, oder worin
X eine Aminomethylengruppe der Formel (IIIe) 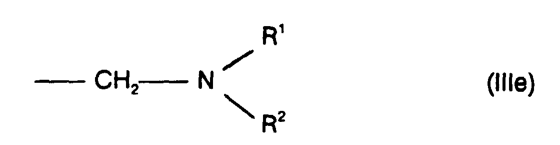 darstellt, worin R¹ und R² die vorstehend angegebene Bedeutung haben und m eine Zahl von 1 bis 6 ist, oder worin
X eine Gruppe der Formel (IIIf) 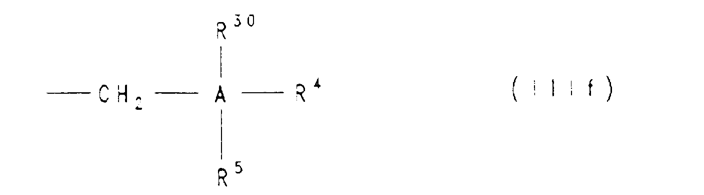 darstellt, worin A einen fünf- oder sechsgliedrigen aromatischen Ring oder einen kondensierten aromatischen Heterocyclus darstellt, welcher 1 bis 3 gleiche oder unterschiedliche Heteroatome aus der Reihe Stickstoff, Sauerstoff und Schwefel enthält und der Heterocyclus über ein Kohlenstoffatom an die Methylengruppe gebunden ist, R³⁰ und R⁴ ein Wasserstoffatom, eine C₁-C₄-Alkyl-, C₁-C₄-Hydroxylalkyl- oder eine C₂-C₄-Alkenylgruppe, vorzugsweise ein Wasserstoffatom, CH₃, C₂H₅ oder C₂H₄OH, oder eine Arylgruppe bedeuten, wobei Aryl für unsubstituiertes oder für mit 1 bis 4 Resten aus der Gruppe C₁-C₆-Alkyl, Halogen, vorzugsweise F, Cl oder Br, C₁-C₆-Alkoxy, Cyan, CONH₂ und COOR¹², wobei R¹² Wasserstoff oder C₁-C₆-Alkyl bedeutet, substituiertes Phenyl steht,
   R³⁰ und R⁴ gemeinsam auch einen aliphatischen oder aromatischen Ring, vorzugsweise einen Phenylring, bilden können,
   R⁵ ein Wasserstoffatom, eine C₁-C₄-Alkyl-, eine C₁-C₃-Hydroxyalkyl- oder eine C₂-C₄-Alkenylgruppe bedeutet und
   m eine Zahl von 1 bis 4 ist, oder worin
X eine Gruppe der Formel (IIIg) 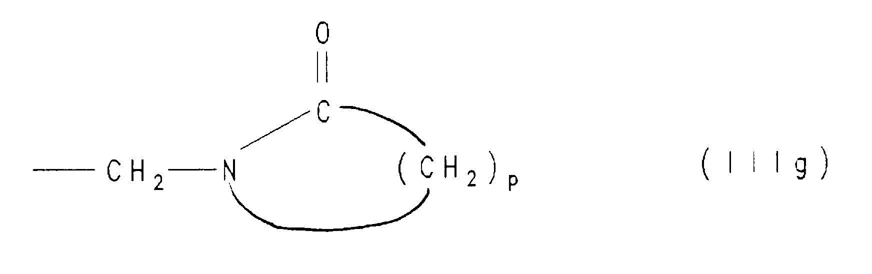 darstellt, wobei p eine Zahl von 3 bis 6, vorzugsweise 3 bis 5, und m eine Zahl von 1 bis 4 ist, oder worin
X eine Phthalimidomethylengruppe der Formel (IIIh) 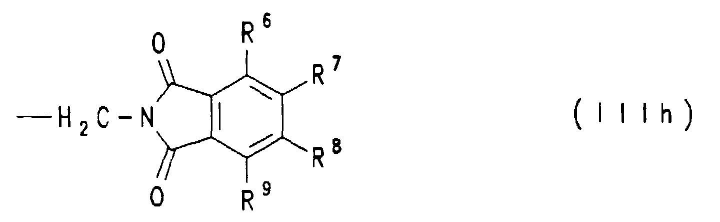 darstellt, wobei R⁶, R⁸ und R⁹ gleich oder verschieden sind und ein Wasserstoff-, Fluor- Chlor- oder Bromatom, vorzugsweise ein Wasserstoffatom, bedeuten,
   R⁷ ein Wasserstoff-, Fluor, Chlor- oder Bromatom ist oder eine Nitro-, C₁-C₅-Alkyl-, C₁-C₆-Alkoxy- oder Benzoylaminogruppe, vorzugsweise ein Wasserstoffatom, bedeutet, und
   m eine Zahl von 1 bis 4 ist, oder worin
X eine o-Sulfobenzoesäureimidomethylengruppe der Formel (IIIi) 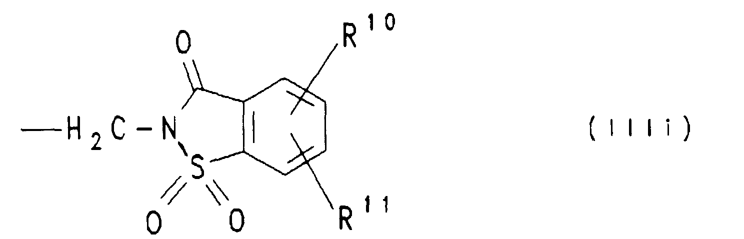 darstellt, wobei R¹⁰ und R¹¹ gleich oder verschieden sind und ein Wasserstoff-, Chlor- oder Bromatom oder eine C₁-C₄-Alkyl-, C₁-C₄-Alkoxy- oder eine Nitrogruppe, vorzugsweise ein Wasserstoffatom, bedeuten und
   m eine Zahl von 1 bis 4 ist, oder worin
X eine Gruppe der Formel (IIIk) 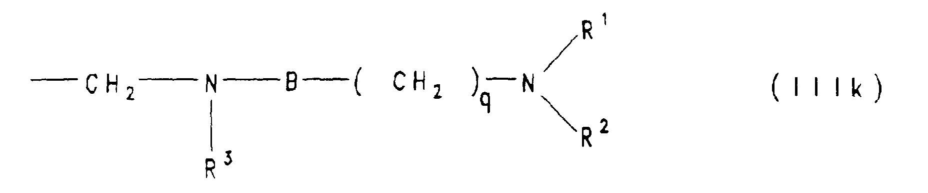 darstellt, in der B eine Carbonyl- oder Sulfonylgruppe, vorzugsweise eine Carbonylgruppe, ist und R¹, R² und R³ die vorstehend angegebene Bedeutung besitzen,
   q die Zahl 1 oder 2, vorzugsweise 1, und
   m eine Zahl von 1 bis 4 ist,
oder es wird mindestens ein Pigmentdispergator der Formel (I) zugegeben, der in einem Molekül verschiedene der vorstehend angegebenen Reste X enthält.

Für das erfindungsgemäße Verfahren zur Herstellung dieser Phthalocyaninpigmente oder Pigmentzubereitungen ist eine hohe Mahlwirkung erforderlich, die durch den Einsatz einer speziellen Ausführungsform der Rührwerkskugelmühle in Verbindung mit der Einhaltung phasenerhaltender Mahl- und Finishbedingungen erreicht wird. Für eine Mahlung der gesuchten Effizienz sind Rührwerkskugelmühlen geeignet, die zum diskontinuierlichen und kontinuierlichen Arbeitsablauf ausgelegt sind, einen zylinderförmigen oder hohlzylinderförmigen Mahlraum in horizontaler oder vertikaler Bauweise enthalten und mit einer spezifischen Leistungsdichte von über 2,5 kW pro Liter Mahlraum betrieben werden können und deren Rührwerksumfangsgeschwindigkeit über 12 m/s beträgt. Derartige Mühlen sind beispielsweise in der DE-OS 3 716 587 (US-PS 5 062 577) beschrieben. Die pro Zeiteinheit vom Rührwerk abgegebene Energie wird als Zerkleinerungsarbeit und als Reibungsenergie in Form von Wärme an das Mahlgut übertragen. Zur problemlosen Abführung dieser großen Wärmemenge muß durch konstruktive Vorkehrungen das Verhältnis von Mahlraum zu Mahlraumoberfläche (Kühlfläche) möglichst klein gehalten werden. Dieses Verhältnis sollte kleiner als 0,15:1 (dm³:dm²) sein.

Als Mahlkörper dienen beispielsweise Kugeln aus Zirkonoxid, Zirkonmischoxid, Aluminiumoxid oder Quarz mit einem Durchmesser kleiner als 1 mm; zweckmäßig werden Mahlkörper mit einem Durchmesser von 0,2 bis 1 mm, vorzugsweise 0,3 bis 0,5 mm, verwendet.

Beim Einsatz von kontinuierlichen Rührwerkskugelmühlen zum Feinverteilen erfolgt die Abtrennung der Mahlkörper vom Mahlgut vorzugsweise durch Zentrifugalabscheidung, so daß die Trennvorrichtungen von den Mahlkörpern praktisch nicht berührt werden, wodurch man Verstopfungen der Trennvorrichtungen weitgehend verhindern kann. Die Rührwerkskugelmühlen werden hierbei mit hohem Mahlkörperfüllgrad betrieben. Bei den kontinuierlichen Rührwerkskugelmühlen wird der Mahlraum praktisch vollständig mit Mahlkörpern ausgefüllt.

Für die Mahlung werden zweckmäßigerweise die bei der Synthese, beispielsweise nach der DE-A 2 256 485 (GB-A 1 422 834) und der US-PS 2 964 532 erhältlichen Rohpigmente oder die nach der Reinigung mit Schwefelsäure gemäß der DE-OS 2 439 983 (GB-A 1 502 884) oder der US-PS 2 284 685 anfallenden hochkristallinen Rohpigmente der α- oder β-Phase eingesetzt, die noch geringe Mengen, das heißt bis zu 5 Mol-% Sulfonsäure- oder Carbonsäuregruppen enthalten können, sowie hochkristalline halogenierte Phthalocyaninrohpigmente gemäß der DE-OS 2 360 793 oder der US-PS 2 247 752. Die eingesetzten Rohpigmente liegen überwiegend, das heißt zu über 90 %, vorzugsweise über 94 %, in der α- oder β-Phase vor. Bei dem Mahlvorgang gemäß Teilschritt a) bleibt die Phase der eingesetzten Phthalocyaninpigmente weitestgehend erhalten. Die Pigmente liegen nach dem Mahlen als feinteilige Pigmente vor.

Je nach dem physikalischen Zustand des Rohpigments müssen zur Phasenerhaltung gegebenenfalls geringe Mengen Lösemittel und/oder oberflächenaktive Mittel zugesetzt werden. Zur Ermittlung der geeigneten Mahlbedingungen sind Vorversuche notwendig. Für den physikalischen Zustand des Rohpigments sind die Reinheit, die Kristallgröße, die Kristallgüte und eventuelle Mischkristallbildungen entscheidend. Im allgemeinen müssen reine und hochkristalline Rohpigmente länger gemahlen werden als verunreinigte und im Kristallgitter gestörte Pigmente. Die Mahlung wird vorzugsweise im wäßrigen oder, falls erforderlich zur Phasenerhaltung, im wäßrigen Medium unter Zusatz von geringen Mengen eines organischen Lösemittels, vorzugsweise bis zu 10 Gew.-%, bezogen auf das gesamte Mahlgut, in homogener Mischung durchgeführt. Es ist auch möglich die Mahlung im organischen Medium durchzuführen. Vorzugsweise wird die Mahlung im alkalischen oder neutralen pH-Bereich durchgeführt.

Die Pigmentkonzentration im Mahlgut ist abhängig von der Rheologie der Suspension und beträgt zweckmäßigerweise höchstens 40 Gew.-%, vorzugsweise 10 bis 35 Gew.-%, insbesondere 10 bis 20 Gew.-%, der Mahlgutsuspension.

Als organische Lösemittel, die vorteilhaft der Mahlgutsuspension zugegeben werden, kommen in Frage: mit Wasser mischbare C₁-C₈-Alkanole wie Methanol, Ethanol, n-Propanol, Isopropanol, n-Butanol, tert.-Butanol, Isobutanol, Pentanol, Hexanol oder Alkylhexanole; cyclische Alkanole wie Cyclohexanol; C₁-C₅-Dialkylketone wie Aceton, Diethylketon, Methylisobutylketon oder Methylethylketon; Ether und Glykolether wie Tetrahydrofuran, Dimethoxyethan, Methylglykol, Ethylglykol, Butylglykol, Ethyldiglykol, Methoxypropanol oder Methoxybutanol; aliphatische Säureamide wie Formamid oder Dimethylformamid; cyclische Carbonsäureamide wie N-Methylpyrrolidon, Valero- oder Caprolactam; heterocyclische Basen wie Pyridin, Morpholin oder Picolin; sowie Dimethylsulfoxid oder Mischungen dieser Lösungsmittel mit Wasser.

Für die Mahlung besonders bevorzugt sind Wasser und Lösungen von C₁-C₆-Alkanolen in Wasser, insbesondere eine Lösung von Isobutanol in Wasser. Für Pigmente der β-Phase sind auch aromatische Lösemittel geeignet, beispielsweise aromatische Kohlenwasserstoffe wie Toluol, Xylole oder Ethylbenzol; aromatische Halogenkohlenwasserstoffe wie Chlorbenzol, o-Dichlorbenzol, 1,2,4-Trichlorbenzol oder Brombenzol sowie substituierte Aromaten wie Nitrobenzol oder Phenol. Bei der Mahlung von Pigmenten der α-Phase sollte auf aromatische Lösemittel verzichtet werden. Bevorzugt ist in diesem Fall die Mahlung nur mit Wasser.

Die Mahlung wird bei Temperaturen im Bereich von 0 bis 100°C, zweckmäßig bei einer Temperatur zwischen 10 und 60°C, vorzugsweise bei 20 bis 50°C, durchgeführt.

Die vorstehend beschriebenen phasenerhaltenden Bedingungen bewirken, daß Phthalocyaninrohpigmente, die überwiegend in der α-Phase vorliegen, nach der Mahlung und dem Finish feinteilige Pigmente überwiegend in der α-Phase ergeben und daß Phthalocyaninrohpigmente, die überwiegend in der β-Phase vorliegen, nach der Mahlung und dem Finish feinteilige Pigmente überwiegend in der β-Phase ergeben.

Das Mahlgut kann neben den vorstehend erwähnten Komponenten noch weitere übliche Zusatzstoffe beispielsweise kationische, anionische oder nichtionische Tenside, vorzugsweise Fettalkoholpolyglykolether, Alkylphenolpolyglykolether, Alkansulfonsäuren sowie ihre Salze, Alkylphenylsulfonsäuren sowie ihre Salze und Alkylphenolpolyglykolethersulfate, rheologisch wirksame Additive, Entschäumer und Extender enthalten.

Die Mahldauer ist abhängig von den Feinheitsanforderungen für das jeweilige Arbeitsgebiet, beispielsweise das Lack-, Druck- oder Kunststoffgebiet. Die Verweilzeit des Mahlguts in der Rührwerkskugelmühle liegt je nach geforderter Feinheit im allgemeinen zwischen 5 und 60 Minuten. Zweckmäßig erweist sich eine Dauer von 5 bis 45 Minuten, vorzugsweise 10 bis 30 Minuten.

Die Zugabe der Pigmentdispergatoren der Formel (I) kann auf einmal oder in mehreren Portionen erfolgen. Die Zugabe kann vor, während oder nach der Mahlung a), während oder nach der Finishbehandlung b) oder während oder nach der Isolierung c), im letztgenannten Fall auch durch trockenes Mischen, vorgenommen werden. Der am besten geeignete Zeitpunkt muß zuvor durch orientierende Versuche ermittelt werden. Vorzugsweise wird die Zugabe der Pigmentdispergatoren nach der Mahlung unmittelbar vor dem Lösemittelfinish vorgenommen.

Besonders bevorzugt sind Pigmentdispergatoren der allgemeinen Formel (I), worin X eine Sulfonamidgruppe der Formel (IIId), eine Phthalimidomethylengruppe der Formel (IIIh), eine Imidazolylmethylengruppe der Formel (IIIf) oder eine o-Sulfobenzoesäureimidomethylengruppe der Formel (IIIi) bedeutet.

Die erfindungsgemäßen Pigmentdispergatoren werden je nach der Größe der spezifischen Oberfläche des zu dispergierenden Phthalocyaninpigments in Mengen von 0,1 bis 25 Gew.-%, vorzugsweise 1 bis 15 Gew.-%, insbesondere 3 bis 12 Gew.-%, bezogen auf das eingesetzte Phthalocyaninpigment zugesetzt. Auch Gemische von unterschiedlichen Pigmentdispergatoren der Formel (I) lösen die Aufgabe der vorliegenden Erfindung.

Die nach der Mahlung vorliegenden feinteiligen Präpigmentzusammensetzungen werden, gegebenenfalls nach Zugabe der Pigmentdispergatoren der Formel (I), in wäßriger Suspension oder bevorzugt nach Beimischung von organischen Lösemitteln einer thermischen Behandlung (Lösemittelfinish) unterzogen. Es ist auch möglich, die Präpigmentzusammensetzung zu trocknen und wasserfrei in einem oder mehreren der nachstehend genannten Lösemittel einem Lösemittelfinish zu unterziehen.

Als Lösemittel für einen Finish kommen beispielsweise in Frage: Alicyclische Kohlenwasserstoffe wie Cyclohexan; C₁-C₈-Alkanole und alicyclische Alkohole wie Methanol, Ethanol, n- oder Isopropanol, n-, iso- oder tert-Butanol, Pentanole, Hexanole, Cyclohexanol; C₁-C₅-Dialkyl- oder cyclische Ketone wie Aceton, Diethylketon, Methylisobutylketon, Methylethylketon oder Cyclohexanon; Ether und Glykolether wie Dimethoxyethan; Tetrahydrofuran; der Monomethyl- oder Monoethylether des Ethylen- oder Propylenglykols, Butylglykol, Ethyldiglykol oder Methoxybutanol; aliphatische Carbonsäureamide wie Formamid oder Dimethylformamid; cyclische Carbonsäureamide wie N-Methylpyrrolidon; Carbonsäure-C₁-C₄-alkylester wie Ameisensäurebutylester, Essigsäureethylester oder Propionsäurepropylester; Carbonsäure-C₁-C₄-glykolester, sowie Dimethylsulfoxid und Sulfolan oder Gemische der vorstehend genannten Lösemittel. Für Pigmente der β-Phase sind auch aromatische Lösemittel geeignet, beispielsweise aromatische Kohlenwasserstoffe wie Toluol, Xylole oder Ethylbenzol; aromatsiche Halogenkohlenwasserstoffe wie Chlorbenzol, o-Dichlorbenzol, 1,2,4-Trichlorbenzol oder Brombenzol; substituierte Aromaten wie Nitrobenzol oder Phenol, Phthalsäure- und Benzoesäure-C₁-C₄-alkylester wie Benzoesäureethylester; heterocyclische Basen wie Pyridin, Morpholin oder Picolin. Bevorzugte organische Lösemittel sind C₁-C₆-Alkanole, insbesondere Ethanol, Propanole, Butanole und Pentanole, besonders bevorzugt Butanole, sowie Ketone, insbesondere Aceton.

Die für die Durchführung des Lösemittelfinishs einzuhaltenden Bedingungen sind in hohem Maße von den angestrebten Eigenschaften der Pigmentzubereitung abhängig und werden jeweils daraufhin ausgerichtet. Normalerweise wird die Suspension der Präpigmentzusammensetzung in dem inerten flüssigen Medium der Verfahrensstufe a) bei einer Temperatur im Bereich zwischen 50 und 200°C, unter Atmosphärendruck oder unter erhöhtem Druck, 1 bis 24 Stunden behandelt. Im allgemeinen wird dafür die nach der Naßmahlung erhaltene Suspension ohne Zwischenisolierung des Mahlguts eingesetzt. Es können jedoch auch die vorstehend genannten Lösemittel zugegeben werden, wobei die zugefügte Lösemittelmenge innerhalb weiter Grenzen schwanken kann. Bevorzugt verwendet man die gleiche bis zur 5-fachen Gewichtsmenge Lösemittel, bezogen auf das Gewicht der Präpigmentzusammensetzung. Die thermische Behandlung im wäßrig-organischen Medium erfolgt bevorzugt für die Dauer von 1 bis 6 Stunden bei 50 bis 150°C. Nach beendetem Finish werden die dafür gebrauchten Lösemittel wieder zurückgewonnen und erneut eingesetzt.

Durch die Wahl des organischen Lösemittels, dessen Konzentration, die Auswahl der Temperatur und die Dauer der Finishbehandlung lassen sich je nach dem gewünschten Verwendungszweck Phthalocyaninpigmentzubereitungen herstellen, die entweder eine höhere Transparenz oder eine bessere Deckkraft besitzen.

Die Herstellung von Pigmentzubereitungen auf Basis von Kupferphthalocyaninen nach dem erfindungsgemäßen Verfahren hat sich als besonders wirtschaftlich sowie umweltfreundlich erwiesen, weil bei der Feinverteilung der Rohpigmente durch Naßmahlung keine Verschmutzung der Luft aufgrund von Staubentwicklung auftritt. Außerdem werden nur geringe Mengen der vorstehend genannten Zusatzstoffe und Lösemittel eingesetzt, welche anschließend weiterverarbeitet oder die wieder vollständig regeneriert werden können, so daß keine Entsorgungsprobleme auftreten.

Die nach der vorliegenden Erfindung erhältlichen Pigmentzubereitungen zeichnen sich aus durch ihre hervorragenden coloristischen und rheologischen Eigenschaften, insbesondere der Flockungsstabilität, Dispergierbarkeit, Rheologie, Glanzverhalten, und Farbstärke.

Die erfindungsgemäß hergestellten Pigmentzubereitungen lassen sich zum Pigmentieren von hochmolekularen organischen Materialien natürlicher oder synthetischer Herkunft einsetzen:
Hochmolekulare organische Materialien, die mit den genannten Pigmentzubereitungen pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmentzubereitungen als Toner oder in Form von Präparationen oder Dispersionen zu benutzen. Bezogen auf das zu pigmentierende hochmolekulare organische Material setzt man die erfindungsgemäß hergestellten Pigmentzubereitungen in einer Menge von 0,1 bis 10 Gew.-% ein.

Besonders bevorzugte Lacksysteme sind die neuartigen, wäßrigen Lacke sowie die lösemittelarmen High-Solid-Lacke mit hohem Festkörperanteil. Geeignet sind auch die herkömmlichen Lacksysteme aus der Klasse der Alkydmelaminharzlacke und Zweikomponentenlacke auf Basis von mit Polyisocyanat vernetzbaren Alkyd- und Acrylharzen.

Die erfindungsgemäß hergestellten Pigmentzubereitungen sind in vielen Anwendungsmedien leicht und bis zu hohen Feinheiten dispergierbar. Solche Pigmentdispersionen besitzen eine hohe Flockungsstabilität und zeigen hervorragende rheologische Eigenschaften selbst bei hoher Pigmentierung. Mit ihnen lassen sich Lackierungen und Drucke von hoher Farbstärke, hohem Glanz und hoher Transparenz mit ausgezeichneten Echtheitseigenschaften erzielen.

Zur Beurteilung der Eigenschaften der erfindungsgemäß hergestellten Pigmentzubereitungen auf dem Lacksektor wurden aus der Vielzahl der bekannten Lacke ein aromatenhaltiger Alkydmelaminharzlack (AM) auf Basis eines mittelöligen, nichttrocknenden Alkydharzes aus synthetischen Fettsäuren und Phthalsäureanhydrid sowie eines butanolveretherten Melaminharzes und Anteilen eines nichttrocknenden Alkydharzes auf Basis von Ricinussäure (kurzölig), ein High-Solid-Acrylharzeinbrennlack auf Basis einer nichtwäßrigen Dispersion (TSA) sowie ein wäßriger Lack auf Polyurethanbasis (PUR) ausgewählt.

Zur Beurteilung der Eigenschaften der nach der vorliegenden Erfindung hergestellten Pigmentzubereitungen auf dem Kunststoffgebiet wurde aus der Vielzahl der bekannten Kunststoffe Weichpolyvinylchlorid (PVC) ausgewählt.

Zur Beurteilung der Eigenschaften der nach der vorliegenden Erfindung hergestellten Pigmentzubereitungen in der Drucktechnik wurden aus der Vielzahl der bekannten Drucksysteme ein Tiefdrucksystem auf Nitrocellulosebasis (NC-Druck) ausgewählt.

Die Bestimmung der Farbstärke und des Farbtons erfolgte nach DIN 55986. Die Rheologie des Mahlguts nach der Dispergierung (Millbase-Rheologie) wurde anhand der folgenden fünfstufigen Skala bewertet:
5 dünnflüssig
4 flüssig
3 dickflüssig
2 leicht gestockt
1 gestockt

Nach dem Verdünnen des Mahlguts auf die Pigmentendkonzentration wurde die Viskosität mit dem Viskospatel nach Rossmann, Typ 301 der Firma Erichsen, Iserlohn, beurteilt.

Glanzmessungen erfolgten an Folienaufgüssen unter einem Winkel von 20 ° nach DIN 67 530 (ASTMD 523) mit dem "multigloss"-Glanzmeßgerät der Firma Byk-Mallinckrodt, Wesel.
Die Bestimmung des Pigmentgehalts der Phthalocyaninrohpigmente erfolgte durch Umlösen aus konzentrierter Schwefelsäure.
Die Bestimmung der Kristallphase der Rohpigmente, Pigmente und Pigmentzubereitungen erfolgte durch Röntgenspektroskopie. Die Aufnahme der Röntgenspektren erfolgte mit Cu K_{α} -Strahlung.
Die Bestimmung der Kristallphase der Pigmente und Pigmentzubereitungen in den Anwendungsmedien erfolgte durch Spektralphotometrie.

Figur 1 zeigt das Röntgenbeugungsdiagramm einer Kupferphthalocyaninpigmentzubereitung in der β-Phase, erhalten nach Beispiel 2 der vorliegenden Erfindung.

Figur 2 zeigt das Röntgenbeugungsdiagramm einer Kupferphthalocyaninpigmentzubereitung in der α-Phase, erhalten nach Beispiel 21 der vorliegenden Erfindung.

Figur 3 zeigt das Röntgenbeugungsdiagramm eines grobkristallinen Kupferphthalocyaninrohpigments, das zu 95,5 % in der β-Phase vorliegt.

In den nachstehenden Beispielen beziehen sich Teile jeweils auf Gewichtsteile und Prozente jeweils auf Gewichtsprozente der beschriebenen Substanzen.

### Beispiel 1

In eine Rührwerkskugelmühle mit der in der DE-A 3 716 587 (US-PS 5 062 577) beschriebenen Ausführungsform, die mit 336 Teilen Zirkonmischoxidperlen vom Durchmesser 0,3 bis 0,4 mm als Mahlkörper gefüllt ist, wird eine Suspension, bestehend aus 85 Teilen wäßrigem Isobutanol (5 %ig) und 15 Teilen grobkristallinem Kupferphthalocyaninrohpigment (β-Phase, 95,5 %ig) eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper mit 210 Teilen Wasser abgespült und die Mahlgutsuspensionen vereinigt.

Zu der vereinigten Mahlgutsuspension fügt man 1,5 Teile Pigmentdispergator der Formel (I) als 16,0 %igen wasserfeuchten Preßkuchen hinzu. In Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 45 Teile Isobutanol (100 %ig) zugesetzt und 24 Stunden bei 25°C gerührt. Man erhitzt zum Sieden, rührt 3 Stunden bei Siedetemperatur und destilliert sodann das Isobutanol durch Erhitzen bis auf 100°C am Übergang azeotrop ab. Nach dem Abkühlen auf 60°C wird die Pigmentzubereitung abgesaugt, mit Wasser gewaschen und bei 80°C getrocknet.

Man erhält 14,9 Teile Pigmentzubereitung (β-Phase) die im AM-Lack farbstarke Lackierungen liefert. Die Rheologie wird mit 3 bewertet. Die Viskosität beträgt 5,9 s und die Glanzmessung ergibt den Wert 88. Im PUR-Lack werden ebenfalls farbstarke Lackierungen erhalten. Die Rheologie wird mit 5 bewertet.

Im Nitrocellulosetiefdruck werden farbstarke und glänzende Drucke erhalten.

### Beispiel 2

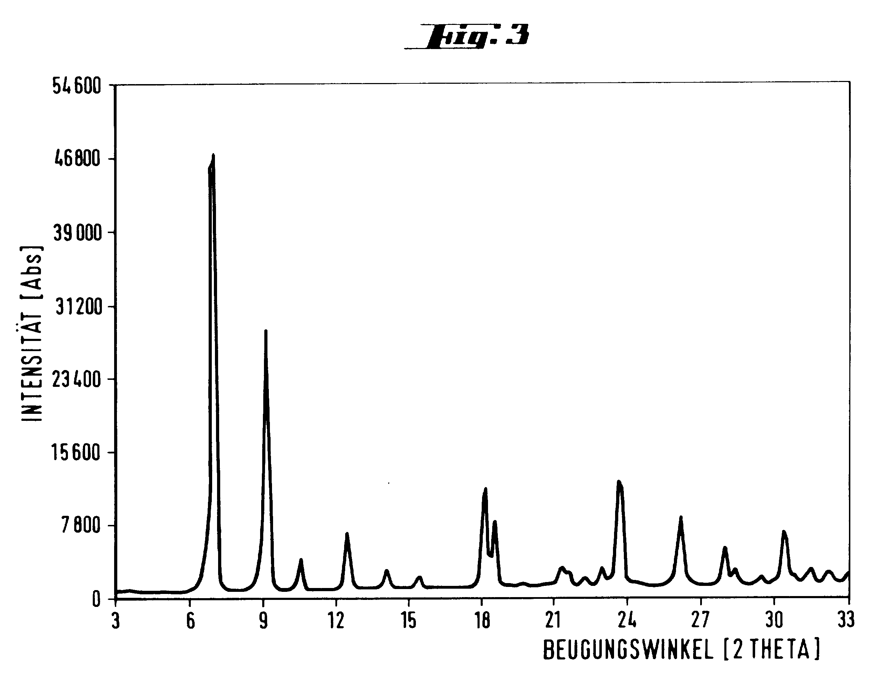

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen wäßrigem Isobutanol (5 %ig) und 15 Teilen grobkristallinem Kupferphthalocyaninrohpigment (β-Phase, 95,5 %ig, siehe Figur 3), eindosiert und dann mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 45 Teile Isobutanol (100 %ig) zugesetzt, 3 Stunden bei Siedetemperatur gerührt und sodann das Isobutanol durch Erhitzen bis auf 100°C am Übergang azeotrop abdestilliert. Nach dem Abkühlen auf 60°C wird die Pigmentzubereitung abgesaugt, mit Wasser gewaschen und bei 80°C getrocknet.

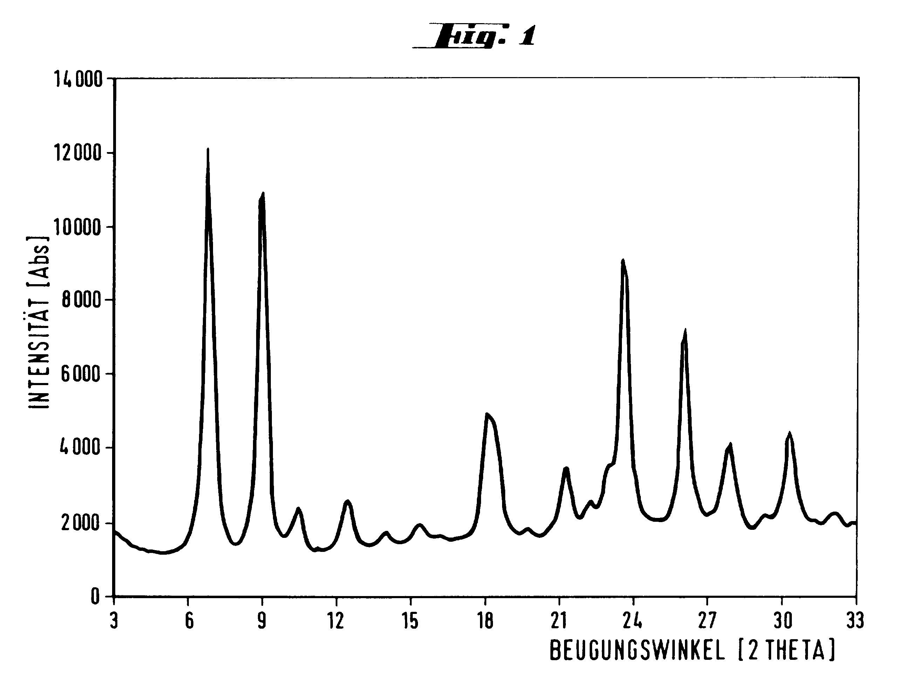

Man erhält 15,9 Teile Pigmentzubereitung (β-Phase, siehe Figur 1), die im AM-Lack farbstarke Lackierungen liefert. Die Rheologie wird mit 3 bis 4 bewertet. Die Viskosität beträgt 3,4 s und die Glanzmessung ergibt den Wert 86. Im Offsetdruck werden Drucke mit hoher Transparenz und Farbstärke erhalten. Die Fließfähigkeit der Druckfarbe ist sehr gut.

### Vergleichsbeispiel 2 a

Wird das in Beispiel 2 eingesetzte Rohpigment auf einer Perlmühle, beispielsweise vom Typ Moulinex der Fa. Netzsch, Selb/Bayern, gemäß der DE-A 2 439 983 (GB-A 1 502 884) und der oben angegebenen Mahlgutzusammensetzung 0,5 Stunden gemahlen und danach wie oben gefinisht, so wird eine Pigmentzubereitung erhalten, die im AM-Lack 35 % farbschwächer und bedeutend trüber ist als die erfindungsgemäß hergestellte Pigmentzubereitung.

### Vergleichsbeispiel 2 b

Wird die Mahlung auf einer Perlmühle, beispielsweise vom Typ Moulinex der Fa. Netzsch, Selb/Bayern, auf 2 Stunden ausgedehnt, so ist die Pigmentzubereitung im AM-Lack immer noch um 18 % farbschwächer und deutlich trüber als die erfindungsgemäße Pigmentzubereitung.

### Vergleichsbeispiel 2 c

Wird das in Beispiel 2 eingesetzte Rohpigment auf einer Perlmühle mit Scheibenrührwerk, Ausführungsform gemäß der US-PS 2 816 115, mit Quarzperlen vom Durchmesser 1 mm mit der Rührwerksumfangsgeschwindigkeit 10,2 m/s und der spezifischen Leistungsdichte von 0,45 kW pro Liter Mahlraum mit der in Beispiel 2 angegebenen Mahlgutzusammensetzung gemahlen und danach wie in Beispiel 2 gefinisht, so erhält man eine Pigmentzubereitung, die im AM-Lack um 36% farbschwächer und bedeutend trüber ist als die erfindungsgemäß hergestellte Pigmentzubereitung.

### Vergleichsbeispiel 2 d

Wird das in Beispiel 2 eingesetzte Rohpigment mit den in der US-PS 3 775 149, Beispiel 25 beschriebenen Mahlbedingungen (Perlmühle mit Scheibenrührwerk, Quarzperlen vom Durchmesser 1,0 mm) 12 Stunden lang gemahlen und danach aufgearbeitet, so erhält man ein Pigment, das um 25 % farbschwächer und deutlich trüber ist als die erfindungsgemäß hergestellte Pigmentzubereitung.

### Beispiel 3

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 80 Teilen Wasser, 4,25 Teilen Isobutanol (100 %ig), 0,85 Teilen Ätznatron (99 %ig) und 15 Teilen grobkristallinem Kupferphthalocyaninrohpigment (β-Phase, 95,5 %ig), eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt und der Filterkuchen mit Wasser neutral gewaschen.

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 45 Teile Isobutanol (100 %ig) zugesetzt, 3 Stunden bei Siedetemperatur gerührt und sodann das Isobutanol durch Erhitzen bis auf 100°C am Übergang azeotrop abdestilliert. Nach dem Abkühlen auf 60°C wird die Pigmentzubereitung abgesaugt, mit Wasser gewaschen und bei 80°C getrocknet.

Man erhält 14,5 Teile Pigmentzubereitung (β-Phase), die im AM-Lack farbstarke Lackierungen liefert. Die Rheologie wird mit 3 bewertet. Die Viskosität beträgt 6,4 s und die Glanzmessung ergibt den Wert 87.

Im PUR-Lack werden ebenfalls farbstarke Lackierungen erhalten. Die Rheologie wird mit 5 bewertet.

### Beispiel 4

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Isobutanol (5 %ig) und 15 Teilen grobkristallinem Kupferphthalocyaninrohpigment (β-Phase, 95,5 %ig), eingetragen und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper mit Wasser abgespült und die vereinigten Mahlgutsuspensionen abgesaugt.

Zur Finishoperation wird der Filterkuchen in 120 Teilen Wasser aufgenommen und 0,75 Teile Pigmentdispergator der Formel (I), in der P den in Formel (II) angegebenen Rest bedeutet und worin Me ein Kupferatom ist, X die o-Sulfobenzoesäureimidomethylengruppe der Formel (IIIi) darstellt, R¹⁰ und R¹¹ jeweils ein Wasserstoffatom bedeutet und m die Zahl 1,0 ist und der noch 50 % unsubstituiertes Kupferphthalocyanin enthält, als 19,4 %iger wasserfeuchter Preßkuchen hinzugefügt. Danach werden 45 Teile Isobutanol (100 %ig) zugesetzt und 24 Stunden bei 25°C gerührt. Man erhitzt zum Sieden, rührt 3 Stunden bei Siedetemperatur und destilliert sodann das Isobutanol durch Erhitzen bis auf 100°C am Übergang azeotrop ab. Nach dem Abkühlen auf 60°C wird die Pigmentzubereitung abgesaugt, mit Wasser gewaschen und bei 80°C getrocknet.

Man erhält 15,0 Teile Pigmentzubereitung (β-Phase), die im Kunststoff (PVC) farbstarke Ausfärbungen mit einwandfreier Ausblutechtheit liefert.

### Beispiel 5

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Isobutanol (5 %ig), 15 Teilen grobkristallinem Kupferphthalocyaninrohpigment (β-Phase, 95,5 %ig) und 1,5 Teilen Pigmentdispergator der Formel (I), in der P den in Formel (II) angegebenen Rest bedeutet, Me ein Kupferatom ist und X die o-Sulfobenzoesäureimidomethylengruppe der Formel (IIIi) darstellt, worin R¹⁰ und R¹¹ jeweils ein Wasserstoffatom bedeutet und m die Zahl 1,0 ist und der noch 50 % unsubstituiertes Kupferphthalocyanin enthält, als 19,4 %iger wasserfeuchter Preßkuchen eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgetrennt, die Mahlkörper werden mit Wasser abgespült und die vereinigten Mahlgutsuspensionen abgesaugt.

Zur Finishoperation wird der Filterkuchen in 120 Teilen Wasser aufgenommen, danach fügt man 45 Teile Isobutanol (100 %ig) hinzu und rührt 24 Stunden bei 25°C nach. Man erhitzt zum Sieden, rührt 3 Stunden bei Siedetemperatur und destilliert sodann das Isobutanol durch Erhitzen bis auf 100°C am Übergang azeotrop ab. Nach dem Abkühlen auf 60°C wird die Pigmentzubereitung abgesaugt, mit Wasser gewaschen und bei 80°C getrocknet.

Man erhält 14,9 Teile Pigmentzubereitung (β-Phase), die im PUR-Lack farbstarke Lackierungen liefert. Die Rheologie wird mit 5 bewertet.

### Beispiel 6

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Isobutanol (5 %ig) und 15,8 Teilen grobkristallinem Kupferphthalocyaninrohpigment (β-Phase, 94,9 %ig), eindosiert und mit einer Rührwerksumfangsgeschwindigkeit von 15,6 m/s 30 Minuten lang bei 25°C gemahlen. Anschließend wird die Mahlgutsuspension von den Mahlkörpern abgetrennt, die Mahlkörper werden mit Wasser abgespült und die vereinigten Mahlgutsuspensionen abgesaugt.

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen hinzugefügt. In der Formel (I) bedeutet P den in der Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 45 Teile Isobutanol (100 %ig) zugesetzt, 3 Stunden bei Siedetemperatur gerührt und sodann das Isobutanol durch Erhitzen bis auf 100°C am Übergang azeotrop abdestilliert. Nach dem Abkühlen auf 60°C wird die Pigmentzubereitung abgesaugt, mit Wasser gewaschen und bei 80°C getrocknet.

Man erhält 15,6 Teile Pigmentzubereitung (β-Phase, mit Spuren α-Phase), die im AM-Lack transparente und farbstarke Lackierungen liefert. Die Rheologie wird mit 1 bis 2 bewertet. Die Viskosität beträgt 4,4 s und die Glanzmessung ergibt den Wert 88.

### Beispiel 7

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen wäßrigem Isobutanol (5 %ig) und 10 Teilen grobkristallinem Kupferphthalocyaninrohpigment (β-Phase, 95,5 %ig), eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 80 Teilen Wasser aufgenommen und 1,0 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 5 Teile Isobutanol (100 %ig) zugesetzt, 3 Stunden bei Siedetemperatur gerührt und sodann das Isobutanol durch Erhitzen bis auf 100°C am Übergang azeotrop abdestilliert. Nach dem Abkühlen auf 60°C wird die Pigmentzubereitung abgesaugt, mit Wasser gewaschen und bei 80°C getrocknet.

Man erhält 10,5 Teile Pigmentzubereitung (β-Phase), die im AM-Lack farbstarke Lackierungen liefert.

### Beispiel 8

In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension, bestehend aus 85 Teilen wäßrigem n-Butanol (5 %ig) und 15 Teilen grobkristallinem Kupferphthalocyaninrohpigment (β-Phase, 99,0 %ig), eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 45 Teile n-Butanol (100 %ig) zugesetzt, 3 Stunden bei Siedetemperatur gerührt und sodann das n-Butanol durch Erhitzen bis auf 100°C am Übergang azeotrop abdestilliert. Nach dem Abkühlen auf 60°C wird die Pigmentzubereitung abgesaugt, mit Wasser gewaschen und bei 80°C getrocknet.

Man erhält 16,1 Teile Pigmentzubereitung (β-Phase), die im AM-Lack farbstarke Lackierungen liefert.

### Beispiel 9

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen wäßrigem Isobutanol (5%ig) und 15 Teilen grobkristallinem Kupferphthalocyaninrohpigment (β-Phase, 94,9 %ig), eindosiert und mit einer Rührwerksumfangsgeschwindigkeit von 15,6 m/s sowie einer spezifischen Leistungsdichte von 3,1 kW pro Liter Mahlraum 30 Minuten lang bei 25° C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 2,6 ist. Danach werden 45 Teile Isobutanol (100%ig) zugesetzt, 3 Stunden bei Siedetemperatur gerührt und sodann das Isobutanol durch Erhitzen bis auf 100°C am Übergang azeotrop abdestilliert.

Nach dem Abkühlen auf 60°C wird die Pigmentzubereitung abgesaugt, mit Wasser gewaschen und bei 80°C getrocknet.

Man erhält 15,9 Teile Pigmentzubereitung (β-Phase), die im AM-Lack farbstarke Lackierungen liefert.

### Beispiel 10

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen wäßrigem Isobutanol (5%ig) und 15 Teilen grobkristallinem Kupferphthalocyaninrohpigment (β-Phase, 94,9%ig), eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 120 Teilen Wasser aufgenommen und 1,5 Teile Pigmentdispergator der Formel (I) als 15,0 %iger wasserfeuchter Preßkuchen hinzugefügt. In der Formel (I) bedeutet P den in Formel (II) angegebenen Rest, worin Me ein Kupferatom ist und in der X die Gruppe der Formel (IIIf) darstellt, worin A ein Imidazolylrest ist, R³⁰ eine Methylgruppe ist, R⁴ und R⁵ je ein Wasserstoffatom darstellen und m die Zahl 1,0 ist. Der Pigmentdispergator enthält noch 40% unsubstituiertes Kupferphthalocyanin. Danach werden 45 Teile Isobutanol (100 %ig) zugesetzt, 3 Stunden bei Siedetemperatur gerührt und sodann das Isobutanol durch Erhitzen bis auf 100°C am Übergang azeotrop abdestilliert. Nach dem Abkühlen auf 60°C wird die Pigmentzubereitung abgesaugt, mit Wasser gewaschen und bei 80°C getrocknet.

Man erhält 15,4 Teile Pigmentzubereitung (β-Phase), die im AM- und TSA-Lack farbstarke Lackierungen liefert.

### Beispiel 11

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen wäßrigem Isobutanol (5%ig) und 15 Teilen grobkristallinem Kupferphthalocyaninrohpigment (β-Phase, 95,5 %ig), eindosiert und dann mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper mit Wasser abgespült und die vereinigten Mahlgutsuspensionen abgesaugt.

Zur Finishoperation wird der auf dem Filter erhaltene Preßkuchen in 120 Teilen Wasser aufgenommen und 1,5 Teile Pigmentdispergator der Formel (I) als 11,4 %iger wasserfeuchter Preßkuchen hinzugefügt. In der Formel (I) bedeutet P den in Formel (II) angegebenen Rest, worin Me ein Kupferatom ist und in der X die Methylenlactamgruppe der Formel (IIIg) darstellt, in der p die Zahl 5,0 und m die Zahl 3,0 ist. Danach werden 45 Teile Isobutanol (100 %ig) zugesetzt, 3 Stunden bei Siedetemperatur gerührt und sodann das Isobutanol durch Erhitzen bis auf 100°C am Übergang azeotrop abdestilliert. Nach dem Abkühlen auf 60°C wird die Pigmentzubereitung abgesaugt, mit Wasser gewaschen und bei 80°C getrocknet.

Man erhält 16,0 Teile Pigmentzubereitung (β-Phase), die im AM-Lack farbstarke Lackierungen liefert.

### Beispiel 12

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen wäßrigem Isobutanol (5%ig) und 15 Teilen grobkristallinem Kupferphthalocyaninrohpigment (β-Phase, 94,9 %ig), eindosiert und dann mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 120 Teilen Wasser aufgenommen und 1,5 Teile Pigmentdispergator der Formel (I) als 53,0 %iger wasserfeuchter Preßkuchen hinzugefügt. In der Formel (I) bedeutet P den in Formel (II) angegebenen Rest, worin Me ein Kupferatom ist und in der X die Sulfonamidgruppe der Formel (IIId) darstellt, in der o die Zahl 0 ist, R¹ ein Wasserstoffatom ist, R² die Oleylgruppe darstellt und m die Zahl 3,7 ist. Danach werden 45 Teile Isobutanol (100 %ig) zugesetzt, 3 Stunden bei Siedetemperatur gerührt und sodann das Isobutanol durch Erhitzen bis auf 100°C am Übergang azeotrop abdestilliert. Nach dem Abkühlen auf 60°C wird die Pigmentzubereitung abgesaugt, mit Wasser gewaschen und bei 80° getrocknet.

Man erhält 16,1 Teile Pigmentzubereitungen (β-Phase), die im AM-Lack farbstarke Lackierungen liefert.

### Beispiel 13

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen wäßrigem Isobutanol (5%ig) und 15 Teilen grobkristallinem Kupferphthalocyaninrohpigment (β-Phase, 95,5%ig), eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 120 Teilen Wasser aufgenommen und 1,5 Teile Pigmentdispergator der Formel (I) als 46,3 %iger wasserfeuchter Preßkuchen hinzugefügt. In der Formel (I) bedeutet P den in Formel (II) angegebenen Rest, worin Me ein Kupferatom ist und in der X die Sulfonamidgruppe der Formel (IIId) darstellt, worin R³ ein Wasserstoffatom ist, R¹ und R² je eine Ethylgruppe darstellen und worin n die Zahl 3,0, o die Zahl 1,0 und m die Zahl 3,7 ist. Danach werden 45 Teile Isobutanol (100 %ig) zugesetzt, 3 Stunden bei Siedetemperatur nachgerührt und sodann das Isobutanol durch Erhitzen bis auf 100°C am Übergang azeotrop abdestilliert. Nach dem Abkühlen auf 60°C wird die Pigmentzubereitung abgesaugt, mit Wasser gewaschen und bei 80°C getrocknet.

Man erhält 15,1 Teile Pigmentzubereitung (β-Phase), die im AM-Lack farbstarke Lackierungen liefert.

### Beispiel 14

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen wäßrigem Isobutanol (5%ig) und 15 Teilen grobkristallinem Kupferphthalocyaninrohpigment (β-Phase, 94,9 %ig), eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 2,6 ist. Danach werden 45 Teile Cyclohexan zugesetzt, 3 Stunden bei Siedetemperatur gerührt und sodann das Cyclohexan durch Erhitzen bis auf 100°C am Übergang abdestilliert. Nach dem Abkühlen auf 60°C wird die Pigmentzubereitung abgesaugt, mit Wasser gewaschen und bei 80°C getrocknet.

Man erhält 15,7 Teile Pigmentzubereitung (β-Phase), die im AM-Lack farbstarke Lackierungen liefert.

### Beispiel 15

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen wäßrigem Isobutanol (5%ig) und 15 Teilen grobkristallinem Kupferphthalocyaninrohpigment (β-Phase, 94,9 %ig), eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 2,6 ist. Danach werden 45 Teile Tetrahydrofuran zugesetzt, 3 Stunden bei Siedetemperatur gerührt und sodann das Tetrahydrofuran durch Erhitzen bis auf 100°C am Übergang abdestilliert. Nach dem Abkühlen auf 60°C wird die Pigmentzubereitung abgesaugt, mit Wasser gewaschen und bei 80°C getrocknet.

Man erhält 15,8 Teile Pigmentzubereitung (β-Phase), die im AM-Lack farbstarke Lackierungen liefert.

### Beispiel 16

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen wäßrigem Isobutanol (5%ig) und 15 Teilen grobkristallinem Kupferphthalocyaninrohpigment (β-Phase, 94,9 %ig), eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 2,6 ist. Danach werden 45 Teile Ethanolamin zugesetzt und 3 Stunden bei Siedetemperatur gerührt. Nach dem Abkühlen auf 60°C wird die Pigmentzubereitung abgesaugt, mit Wasser gewaschen und bei 80°C getrocknet.

Man erhält 15,0 Teile Pigmentzubereitung (β-Phase), die im AM-Lack farbstarke Lackierungen liefert. Die Rheologie wird mit 3 bis 4 bewertet. Die Viskosität beträgt 3,4 s und die Glanzmessung ergibt den Wert 86. Im Offsetdruck werden Drucke mit hoher Transparenz und Farbstärke erhalten. Die Fließfähigkeit der Druckfarbe ist sehr gut.

### Beispiel 17

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Isobutanol (5 %ig) und 10 Teilen grobkristallinem Kupferphthalocyaninrohpigment (β-Phase, 94,9 %ig), eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 80 Teilen Wasser aufgenommen und 0,25 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 0,1 Teile Dodecylbenzolsulfonsäure und 10 Teile Isobutanol (100 %ig) zugesetzt und 3 Stunden bei Siedetemperatur gerührt. Anschließend wird das Isobutanol bis 100°C am Übergang abdestilliert. Nach dem Abkühlen auf 60°C wird die Pigmentzubereitung abgesaugt, mit Wasser gewaschen und bei 80°C getrocknet.

Man erhält 10,2 Teile Pigmentzubereitung (β-Phase), die im AM-Lack farbstarke Lackierungen liefert.

### Beispiel 18

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen wäßrigem Isobutanol (5%ig) und 15 Teilen grobkristallinem Nickelphthalocyaninrohpigment (97,2 %ig) eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 120 Teilen Wasser aufgenommen. Danach werden 45 Teile Isobutanol (100 %ig) zugesetzt, 3 Stunden bei Siedetemperatur gerührt und sodann das Isobutanol durch Erhitzen bis auf 100°C am Übergang azeotrop abdestilliert. Nach dem Abkühlen auf 60°C wird das Pigment abgesaugt, mit Wasser gewaschen und bei 80° getrocknet.

Man erhält 14,9 Teile Pigment. 9,5 Teile Pigment werden mechanisch mit 0,5 Teilen Pigmentdispergator der allgemeinen Formel (I) gemischt. In dieser Formel (I) bedeutet P den in Formel (II) angegebenen Rest, worin Me ein Kupferatom ist, und X die Phthalimidomethylengruppe (IIIh), in der R⁶, R⁷, R⁸ und R⁹ jeweils ein Wasserstoffatom und m die Zahl 1,0 ist. Es wird eine Pigmentzubereitung erhalten, die im AM-Lack farbstarke Lackierungen liefert.

### Beispiel 19

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen wäßrigem Isobutanol (5%ig) und 10 Teilen grobkristallinem chlorhaltigem Kupferphthalocyaninrohpigment (α-Phase, 98,2 %ig, Chlorgehalt 3,4%) eindosiert und mit einer Rührwerksumfangsgeschwindigkeit von 15,6 m/s sowie einer spezifischen Leistungsdichte von 3,1 kW pro Liter Mahlraum 5 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 80 Teilen Wasser aufgenommen. Danach werden 10 Teile Cyclohexanol (100 %ig) zugesetzt, 3 Stunden bei Siedetemperatur gerührt und sodann das Cyclohexanol durch Erhitzen bis auf 100°C am Übergang abdestilliert. Nach dem Abkühlen auf 60°C wird das Pigment abgesaugt, mit Wasser gewaschen und bei 80°C getrocknet.

Man erhält 9,9 Teile Pigment (α-Phase). 9,5 Teile Pigment werden mechanisch mit 0,5 Teilen Pigmentdispergator der allgemeinen Formel (I) gemischt. In dieser Formel (I) bedeutet P den in Formel (II) angegebenen Rest, worin Me ein Kupferatom ist, und X die Phthalimidomethylengruppe der Formel (IIIh), in der R⁶, R⁷, R⁸ und R⁹ jeweils ein Wasserstoffatom und m die Zahl 1,0 ist. Es wird eine Pigmentzubereitung erhalten, die im AM-Lack farbstarke Lackierungen liefert.

### Beispiel 20

In eine Rührwerkskugelmühle (Hersteller: Draiswerke GmbH, Mannheim), die mit 500 Teilen Zirkonoxidperlen vom Durchmesser 0,3 bis 0,4 mm als Mahlkörper gefüllt ist, wird eine Suspension, bestehend aus 70 Teilen wäßrigem Aceton (50%ig) und 30 Teilen grobkristallinem chlorhaltigem Kupferphthalocyaninrohpigment (96,2 %ig, Chlorgehalt 48,0%), eindosiert und mit einer Rührwerksumfangsgeschwindigkeit von 15,6 m/s sowie einer spezifischen Leistungsdichte von 3,1 kW pro Liter Mahlraum 5 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 240 Teilen wäßrigem Aceton (50%ig) aufgenommen und 3 Stunden bei Siedetemperatur gerührt. Anschließend wird das Aceton bis 100°C am Übergang abdestilliert. Nach dem Abkühlen auf 30°C wird das Pigment abgesaugt, mit Wasser gewaschen und bei 80°C getrocknet.

Man erhält 28,9 Teile Pigment. 9,9 Teile Pigment werden mechanisch mit 0,1 Teilen Pigmentdispergator der allgemeinen Formel (I) gemischt. In dieser Formel (I) bedeutet P den in Formel (II) angegebenen Rest, worin Me ein Kupferatom ist, und X die Phthalimidomethylengruppe der Formel (IIIh), in der R⁶, R⁷, R⁸ und R⁹ jeweils ein Wasserstoffatom und m die Zahl 1,0 ist. Es wird eine Pigmentzubereitung erhalten, die im AM-Lack farbstarke Lackierungen liefert.

### Beispiel 21

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen wäßrigem Isobutanol (5%ig) und 15 Teilen grobkristallinem Kupferphthalocyaninrohpigment (α-Phase, 99 %ig), eingetragen und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 45 Teile Isobutanol (100%ig) zugesetzt, 3 Stunden bei Siedetemperatur gerührt und sodann das Isobutanol durch Erhitzen bis auf 100°C am Übergang azeotrop abdestilliert. Nach dem Abkühlen auf 60°C wird die Pigmentzubereitung abgesaugt, mit Wasser gewaschen und bei 80°C getrocknet.

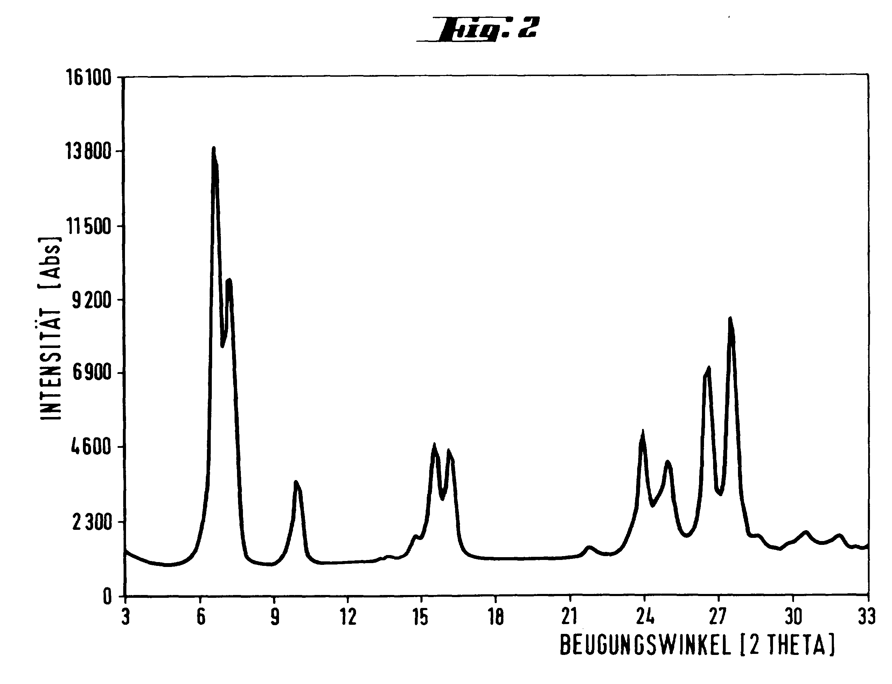

Man erhält 14,1 Teile Pigmentzubereitung (α-Phase, siehe Figur 2), die im aromatenhaltigen AM-Lack nach dem Ausfärben und Einbrennen bei 140°C farbstarke Lackierungen liefert. Die Rheologie wird mit 3 bewertet. Die Viskosität beträgt 5,0 s und der Glanz wird mit 84 bewertet. In dieser Lackierung liegt die Pigmentzubereitung in der α-Phase vor.

Im PUR-Lack werden transparente und farbstarke Lackierungen erhalten. Die Rheologie wird mit 5 bewertet.

Wird diese Pigmentzubereitung gemäß den Angaben der DE-A 2 439 983 (GB-A 1 502 884), Beispiel 1, wobei das Chlorbenzol durch Xylol ersetzt wurde, 5 Stunden in einem Xylol/Wasser-Gemisch zum Sieden erhitzt, so liegt die nach der Isolierung erhaltene
Pigmentzubereitung im Gegensatz zu den in der genannten Offenlegungsschrift gemachten Angaben nicht in der β-Phase, sondern überraschenderweise in der α-Phase vor.

### Vergleichsbeispiel 21 a

Wird das oben eingesetzte Rohpigment auf einer Perlmühle mit Scheibenrührwerk, Ausführungsform gemäß der US-PS 2 816 115, 2 Stunden mit Quarzperlen vom Durchmesser 1mm mit der Rührwerksumfangsgeschwindigkeit von 10,2 m/s sowie der spezifischen Leistungsdichte von 0,45 kW pro Liter Mahlraum mit der oben angegebenen Zusammensetzung gemahlen und wie oben beschrieben gefinisht, so wird im AM-Lack eine Pigmentzubereitung erhalten, die 15% farbschwächer und deutlich trüber ist als die erfindungsgemäß hergestellte Pigmentzubereitung.

### Beispiel 22

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Wasser und 15 Teilen grobkristallinem Kupferphthalocyaninrohpigment (α-Phase, 99 %ig), eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 45 Teile Isobutanol (100%ig) zugesetzt, 3 Stunden bei Siedetemperatur gerührt und sodann das Isobutanol durch Erhitzen bis auf 100°C am Übergang azeotrop abdestilliert. Nach dem Abkühlen auf 60°C wird die Pigmentzubereitung abgesaugt, mit Wasser gewaschen und bei 80°C getrocknet.

Man erhält 15,9 Teile Pigmentzubereitung (α-Phase), die im AM- und TSA-Lack farbstarke Lackierungen liefert. Im Nitrocellulosetiefdruck werden farbstarke Drucke erhalten.

### Beispiel 23

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen wäßrigem Isobutanol (5%ig) und 15 Teilen grobkristallinem Kupferphthalocyaninrohpigment (α-Phase, 99 %ig), eindosiert und dann mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 120 Teilen Wasser aufgenommen. Danach werden 45 Teile Isobutanol (100 %ig) zugesetzt, 3 Stunden bei Siedetemperatur gerührt und sodann das Isobutanol durch Erhitzen bis auf 100°C am Übergang azeotrop abdestilliert. Nach dem Abkühlen auf 60°C wird das Pigment abgesaugt, mit Wasser gewaschen und bei 80°C getrocknet.

Man erhält 14,9 Teile Pigment (α-Phase), das im Kunststoff (PVC) farbstarke Ausfärbungen liefert.

### Beispiel 23 a

9,0 Teile des nach Beispiel 23 hergestellten Pigments werden mechanisch mit 1,0 Teilen Pigmentdispergator der Formel (I) gemischt. In der Formel (I) bedeutet P den in Formel (II) angegebenen Rest, worin Me ein Kupferatom ist und in der X die Gruppe der Formel (IIIf) darstellt, worin A der Imidazolylrest ist, R³⁰ eine Methylgruppe ist, R⁴ und R⁵ je ein Wasserstoffatom darstellen und m die Zahl 1,0 ist. Der Pigmentdispergator enthält noch 40% unsubstituiertes Kupferphthalocyanin.

Es wird eine Pigmentzubereitung erhalten, die im TSA-Lack farbstarke Lackierungen liefert.

### Beispiel 24

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser und 10 Teilen grobkristallinem Kupferphthalocyaninrohpigment (α-Phase, 99 %ig), eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishoperation wird der auf dem Filter erhaltene Preßkuchen in 80 Teilen Wasser aufgenommen und 1,0 Teile Pigmentdispergator der Formel (I) als 15,0 %iger wasserfeuchter Preßkuchen hinzugefügt. In der Formel (I) bedeutet P den in Formel (II) angegebenen Rest, worin Me ein Kupferatom ist und in der X die Gruppe der Formel (IIIf) darstellt, worin A der Imidazolylrest ist, R³⁰ eine Methylgruppe ist, R⁴ und R⁵ je ein Wasserstoffatom darstellen und m die Zahl 1,0 ist. Der Pigmentdispergator enthält noch 40% unsubstituiertes Kupferphthalocyanin. Danach werden 30 Teile Isobutanol (100%ig) zugesetzt, 3 Stunden bei Siedetemperatur gerührt und sodann das Isobutanol durch Erhitzen bis auf 100°C am Übergang azeotrop abdestilliert. Nach dem Abkühlen auf 60°C wird die Pigmentzubereitung abgesaugt, mit Wasser gewaschen und bei 80°C getrocknet.

Man erhält 9,2 Teile Pigmentzubereitung (α-Phase), die im AM-Lack farbstarke Lackierungen liefert.

## Patentansprüche

1. Verfahren zur Herstellung eines Phthalocyaninpigments oder einer Pigmentzubereitung auf Basis eines Phthalocyaninpigments unter Erhalt der Phase des eingesetzten Phthalocyaninrohpigments, dadurch gekennzeichnet, daß man ein Phthalocyaninrohpigment,
a) zunächst in einem inerten flüssigen Medium in einer Rührwerkskugelmühle, die mit einer Leistungsdichte von mehr als 2,5 kW pro Liter Mahlraum und einer Rührwerksumfangsgeschwindigkeit von mehr als 12 m/s betrieben wird, unter der Einwirkung von Mahlkörpern mit einem Durchmesser kleiner als 1 mm naßvermahlt, wobei das inerte flüssige Medium im Falle von Phthalocyaninpigmenten der β-Phase oder der halogenierten Phthalocyaninpigmente ein organisches oder wäßrig-organisches Medium, und im Falle von Phthalocyaninpigmenten der α-Phase ein wäßriges, wäßrig-organisches oder organisches Medium, das frei von aromatenhaltigen Lösemitteln ist, bedeutet; anschließend
b) die nach a) erhaltene Präpigmentzusammensetzung entweder
b1) in Form der so erhaltenen Mahlgutsuspension; oder
b2) nach Zusatz eines organischen Lösemittels zu der nach a) erhaltenen Mahlgutsuspension oder
b3) im Falle einer Zwischenisolierung des Präpigments oder der Präpigmentzusammensetzung nach vorheriger Wiederaufnahme in einem organischen Lösemittel einer Finishbehandlung bei erhöhter Temperatur unterwirft,
und
c) anschließend das resultierende Pigment oder die Pigmentzubereitung isoliert.

2. Verfahren nach Anspruch 1, dadurch gekennzeichnet, daß vor, während oder nach einem oder mehreren der Teilschritte a), b) und c) einmal oder mehrmals mindestens ein Pigmentdispergator der Formel (I) zugegeben wird
P ― Xₘ (I),
in welcher
P für einen m-wertigen Rest auf der Basis der Formel (II) 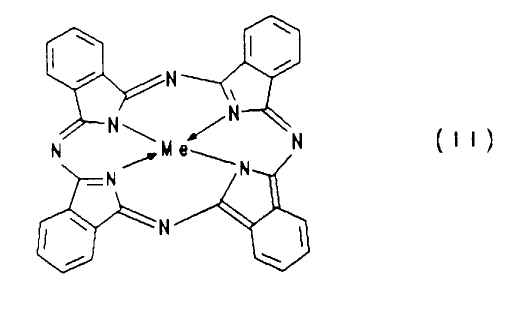 steht, worin
m eine Zahl von 1 bis 6 ist,
Me zwei Wasserstoffatome oder ein zweiwertiges Metallatom, vorzugsweise ein Kupfer-, Eisen-, Zink-, Nickel-, Kobalt- oder Zinnatom, insbesondere ein Kupferatom, bedeutet und
X eine Gruppe der Formel (IIIa)
-COOM (IIIa)
oder eine Gruppe der Formel (IIIb)
-SO₃M (IIIb)
darstellt, worin M ein Wasserstoffatom oder ein Äquivalent eines Alkali-, Erdalkali- oder Ammoniumions bedeutet oder worin
X eine Gruppe der Formel (IIIc) 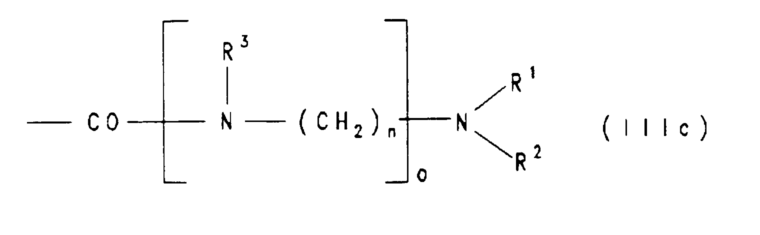 oder eine Gruppe der Formel (IIId) 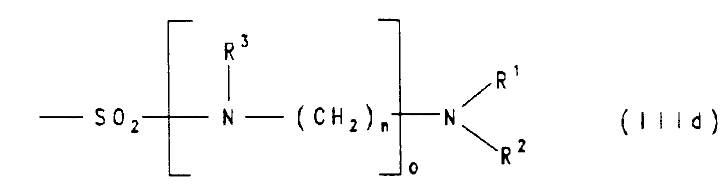 darstellt, worin R¹ und R² gleich oder verschieden sind und ein Wasserstoffatom, eine C₁-C₂₀-Alkyl-, C₂-C₂₀-Alkenylgruppe oder eine C₅-C₇-Cycloalkylgruppe bedeuten, oder worin R¹ und R² gemeinsam mit dem angrenzenden Stickstoffatom ein aliphatisches oder aromatisches, fünf- oder sechsgliedriges heterocyclisches System mit jeweils 1 bis 3 ringangehörigen, gleichen oder unterschiedlichen Heteroatomen aus der Reihe Stickstoff, Sauerstoff oder Schwefel bilden,
R³ ein Wasserstoffatom oder eine C₁-C₄-Alkylgruppe ist,
n eine Zahl von 1 bis 6,
o die Zahl 0 oder 1 und
m eine Zahl von 1 bis 6 sind, oder worin
X eine Aminomethylengruppe der Formel (IIIe) 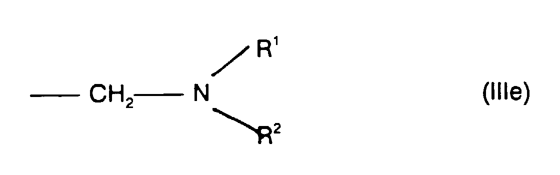 darstellt, worin R¹ und R² die vorstehend angegebene Bedeutung haben und m eine Zahl von 1 bis 6 ist, oder worin
X eine Gruppe der Formel (IIIf) 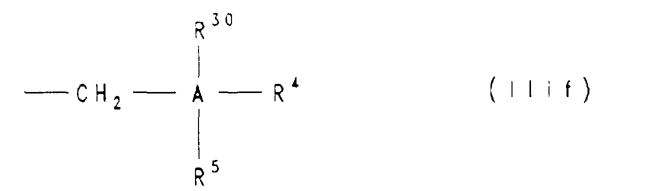 darstellt, worin A einen fünf- oder sechsgliedrigen aromatischen Ring oder einen kondensierten aromatischen Heterocyclus darstellt, welcher 1 bis 3 gleiche oder unterschiedliche Heteroatome aus der Reihe Stickstoff, Sauerstoff und Schwefel enthält und der Heterocyclus über ein Kohlenstoffatom an die Methylengruppe gebunden ist, R³⁰ und R⁴ ein Wasserstoffatom, eine C₁-C₄-Alkyl-, eine C₂-C₄-Alkenyl- oder eine Arylgruppe bedeuten, wobei Aryl für unsubstituiertes oder für ein mit 1 bis 4 Resten aus der Gruppe C₁-C₆-Alkyl, Halogen, vorzugsweise F, Cl oder Br, C₁-C₆-Alkoxy, Cyan, CONH₂ und COOR¹², wobei R¹² Wasserstoff oder C₁-C₆-Alkyl bedeutet, substituiertes Phenyl steht,
R³⁰ und R⁴ gemeinsam auch einen aliphatischen oder aromatischen Ring bilden können,
R⁵ ein Wasserstoffatom, eine C₁-C₄-Alkyl-, eine C₁-C₃-Hydroxyalkyl- oder eine C₂-C₄-Alkenylgruppe bedeutet und
m eine Zahl von 1 bis 4 ist, oder worin
X eine Gruppe der Formel (IIIg) 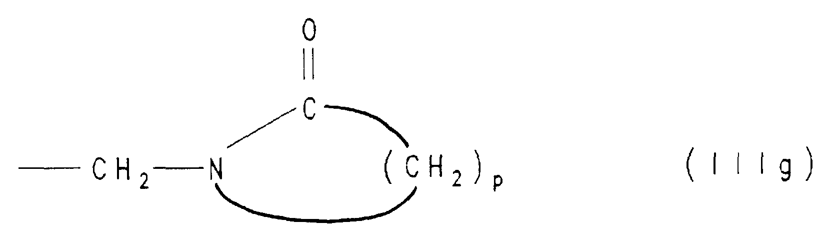 darstellt, wobei p eine Zahl von 3 bis 6 und m eine Zahl von 1 bis 4 ist, oder
X eine Phthalimidomethylengruppe der Formel (IIIh) 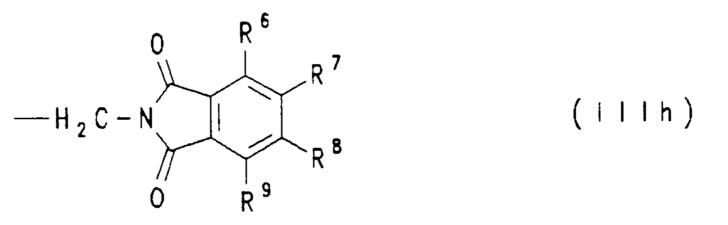 darstellt, wobei R⁶, R⁸ und R⁹ gleich oder verschieden sind und ein Wasserstoff-, Fluor-, Chlor- oder Bromatom bedeuten, R⁷ ein Wasserstoff-, Fluor, Chlor- oder Bromatom ist oder eine Nitro-, C₁-C₅-Alkyl-, C₁-C₆-Alkoxy- oder Benzoylaminogruppe bedeutet, und
m eine Zahl von 1 bis 4 ist, oder worin
X eine o-Sulfobenzoesäureimidomethylengruppe der Formel (IIIi) 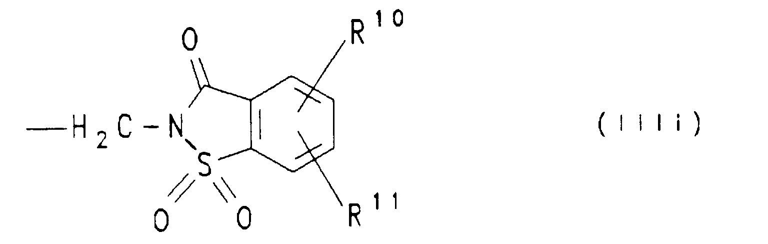 darstellt, wobei R¹⁰ und R¹¹ gleich oder verschieden sind und ein Wasserstoff-, Chlor- oder Bromatom oder eine C₁-C₄-Alkyl-, C₁-C₄-Alkoxy- oder eine Nitrogruppe bedeuten und
m eine Zahl von 1 bis 4 ist, oder worin
X eine Gruppe der Formel (IIIk) 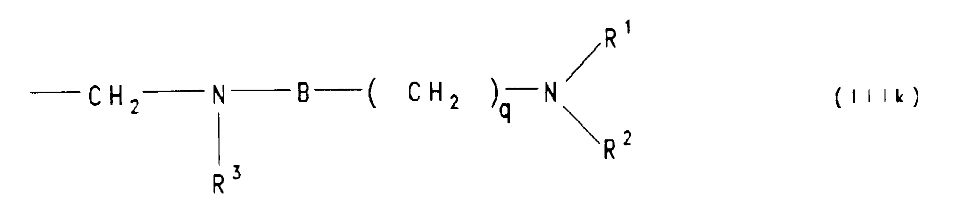 darstellt, in der B eine Carbonyl- oder Sulfonylgruppe ist und R¹, R² und R³ die vorstehend angegebene Bedeutung besitzen,
q die Zahl 1 oder 2 und
m eine Zahl von 1 bis 4 ist,
oder daß mindestens ein Pigmentdispergator der Formel (I) zugegeben wird, der in einem Molekül verschiedene der vorstehend angegebenen Reste X enthält.

3. Verfahren gemäß Anspruch 1 oder 2, dadurch gekennzeichnet, daß man Mahlkörper vom Durchmesser 0,2 bis 1,0 mm, vorzugsweise 0,3 bis 0,5 mm, einsetzt.

4. Verfahren nach mindestens einem der Ansprüche 1 bis 3, dadurch gekennzeichnet, daß in der Rührwerkskugelmühle das Verhältnis von Mahlraum zu Mahlraumoberfläche kleiner als 0,15:1 (dm³:dm²) ist.

5. Verfahren nach mindestens einem der Ansprüche 1 bis 4, dadurch gekennzeichnet, daß die Pigmentkonzentration in der Mahlgutsuspension höchstens 40 Gew.-%, vorzugsweise 10 bis 35 Gew.-%, insbesondere 10 bis 20 Gew.-%, beträgt.

6. Verfahren nach mindestens einem der Ansprüche 1 bis 5, dadurch gekennzeichnet, daß das wäßrig-organische Medium eine Lösung von C₁-C₈-Alkanolen in Wasser, vorzugsweise eine Lösung eines oder mehrerer Butanole in Wasser, ist.

7. Verfahren nach mindestens einem der Ansprüche 1 bis 6, dadurch gekennzeichnet, daß man bei der Finishbehandlung ein Gemisch aus Wasser und einem organischen Lösemittel, vorzugsweise einem C₁-C₈-Alkanol, insbesondere ein Butanol, verwendet.

8. Verfahren nach mindestens einem der Ansprüche 1 bis 7, dadurch gekennzeichnet, daß man hochkristalline Kupferphthalocyaninrohpigmente der α- oder β-Phase einsetzt, die gegebenenfalls noch geringe Mengen Carbonsäure- oder Sulfonsäuregruppen enthalten.

9. Verfahren nach mindestens einem der Ansprüche 1 bis 8, dadurch gekennzeichnet, daß man hochkristalline halogenierte Kupferphthalocyaninrohpigmente einsetzt.

10. Verfahren nach mindestens einem der Ansprüche 1 bis 9, dadurch gekennzeichnet, daß man als Pigmentdispergator mindestens eine Verbindung der Formel (I) einsetzt, in welcher
P die in Anspruch 1 ausgewiesene Bedeutung besitzt,
X eine Phthalimidomethylengruppe der Formel (IIIh) 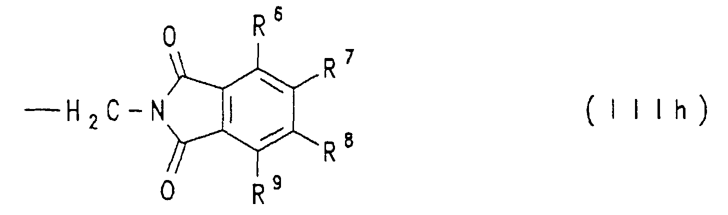
darstellt, wobei R⁶, R⁷, R⁸ und R⁹ jeweils ein Wasserstoffatom bedeuten und
m eine Zahl von 1 bis 4 ist.

11. Verfahren nach mindestens einem der Ansprüche 1 bis 9, dadurch gekennzeichnet, daß man als Pigmentdispergator mindestens eine Verbindung der Formel (I) einsetzt, in welcher
P die in Anspruch 1 ausgewiesene Bedeutung besitzt,
X eine o-Sulfobenzoesäureimidomethylengruppe der Formel (IIIi) 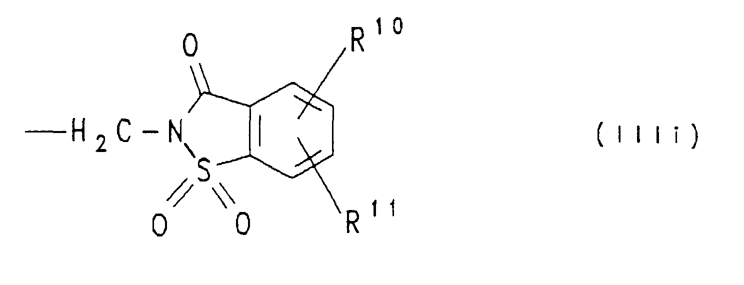
darstellt, wobei R¹⁰ und R¹¹ jeweils ein Wasserstoffatom bedeuten und
m eine Zahl von 1 bis 4 ist.

12. Verfahren nach mindestens einem oder mehreren der Ansprüche 1 bis 9, dadurch gekennzeichnet, daß man als Pigmentdispergator mindestens eine Verbindung der Formel (I) einsetzt, in welcher
P die in Anspruch 1 ausgewiesene Bedeutung besitzt,
X eine Gruppe der Formel (IIIf) 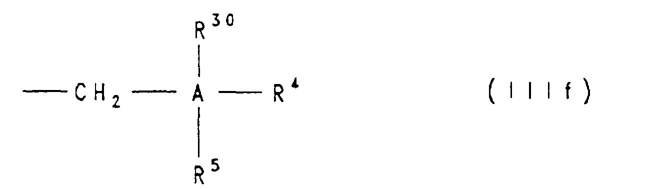
darstellt, worin A einen Imidazol-, Triazol- oder Pyrazolrest bedeutet und der genannte Heterocyclus über ein Kohlenstoffatom an die Methylengruppe gebunden ist,
R³⁰ und R⁴ ein Wasserstoffatom, eine Methyl-, Ethyl- oder C₂H₄-OH-Gruppe sind oder wobei R³⁰ und R⁴ gemeinsam einen Phenylring bilden,
R⁵ ein Wasserstoffatom, eine C₁-C₄-Alkyl-, eine C₁-C₃-Hydroxyalkyl- oder eine C₂-C₄-Alkenylgruppe bedeutet und m eine Zahl von 1 bis 4 ist.

13. Verfahren nach mindestens einem der Ansprüche 1 bis 9, dadurch gekennzeichnet, daß man als Pigmentdispergator mindestens eine Verbindung der Formel (I) einsetzt, in welcher
P die in Anspruch 1 ausgewiesene Bedeutung besitzt,
X eine Sulfonamidgruppe der Formel (IIId) 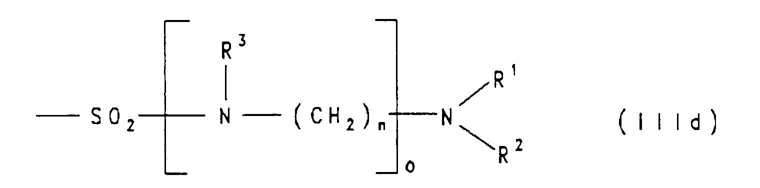
darstellt, worin R¹ und R² unabhängig voneinander jeweils ein Wasserstoffatom, eine Methyl- oder Ethylgruppe sind, oder worin R¹ und R² gemeinsam mit dem angrenzenden Stickstoffatom einen Imidazol-, Piperidin-, Piperazin-, Pyrrolidin-, Morpholin-, Imidazolin- oder Hexamethylenimin-Rest bilden,
R³ ein Wasserstoffatom oder eine C₁-C₄-Alkylgruppe ist,
n die Zahl 2 oder 3,
o die Zahl 1 und
m eine Zahl von 1 bis 4 sind.

14. Verfahren nach mindestens einem der Ansprüche 1 bis 9, dadurch gekennzeichnet, daß man ein Gemisch von unterschiedlichen Pigmentdispergatoren der Formel (I) einsetzt.

15. Verfahren nach mindestens einem der Ansprüche 1 bis 14, dadurch gekennzeichnet, daß die Pigmentdispergatoren der Formel (I) in Mengen von 0,1 bis 25 Gew.-%, vorzugsweise 1 bis 15 Gew.-%, insbesondere 3 bis 10 Gew.-%, bezogen auf das eingesetzte Phthalocyaninpigment, vorhanden sind.

## Claims

1. A process for the production of a phthalocyanine pigment or a pigment preparation based on a phthalocyanine pigment with conservation of the phase of the crude phthalocyanine pigment used, which comprises
a) first wet milling a crude phthalocyanine pigment in an inert liquid medium in a stirred ball mill which is operated at a power density of more than 2.5 kW per liter of milling space and a peripheral speed of the stirrer of more than 12 m/s with exposure to grinding media having a diameter of less than 1 mm, the inert liquid medium, in the case of phthalocyanine pigments of the β phase or of halogenated phthalocyanine pigments, being an organic or aqueous-organic medium, and, in the case of phthalocyanine pigments of the α phase, being an aqueous, aqueous-organic or organic medium which is free from aromatic-containing solvents; then
b) subjecting the prepigment composition obtained by a) either
b1) in the form of the mill base suspension thus obtained, or
b2) after addition of an organic solvent to the mill base suspension obtained by a), or
b3) in the case where the prepigment intermediate or the prepigment composition intermediate is isolated, after first taking it up again in an organic solvent, to a finishing treatment at elevated temperature, and
c) then isolating the resulting pigment or pigment preparation.

2. The process as claimed in claim 1, wherein there is added one or more times, before, during or after one or more of the individual steps a), b) and c), at least one pigment dispersant of the formula (I),
P ― Xₘ (I)
in which
P is an m-valent radical based on the formula (II) 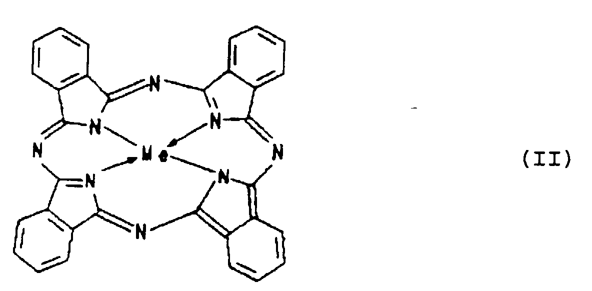 in which
m is from 1 to 6,
Me is two hydrogen atoms or a divalent metal atom, preferably a copper, iron, zinc, nickel, cobalt or tin atom, in particular a copper atom, and
X is a group of the formula (IIIa)
-COOM (IIIa)
or a group of the formula (IIIb)
-SO₃M (IIIb)
in which M is a hydrogen atom or an equivalent of an alkali metal ion, alkaline earth metal ion or ammonium ion or in which
X is a group of the formula (IIIc) 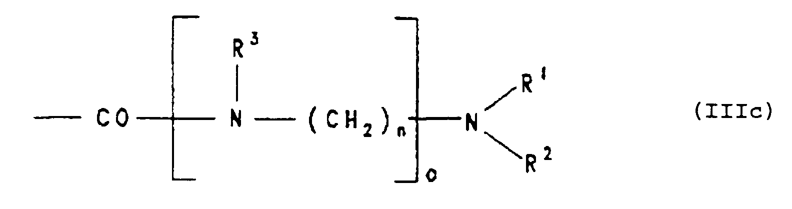 or a group of the formula (IIId) 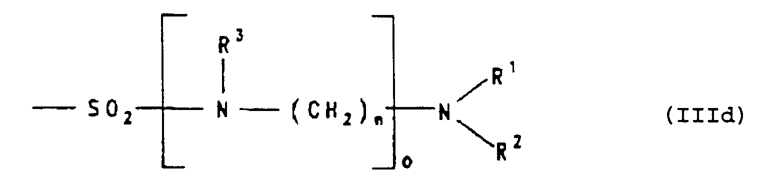 in which R¹ and R² are identical or different and are each a hydrogen atom, a C₁-C₂₀-alkyl, C₂-C₂₀-alkenyl group or a C₅-C₇-cycloalkyl group, or in which R¹ and R² together with the adjacent nitrogen atom form an aliphatic or aromatic, five- or six-membered heterocyclic system having in each case 1 to 3 identical or different heteroatoms belonging to the ring from the group consisting of nitrogen, oxygen or sulfur,
R³ is a hydrogen atom or a C₁-C₄-alkyl group,
n is from 1 to 6,
o is 0 or 1, and
m is from 1 to 6, or in which
X is an aminomethylene group of the formula (IIIe) 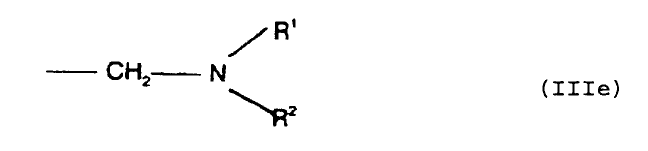 in which R¹ and R² have the abovementioned meanings and m is from 1 to 6, or in which
X is a group of the formula (IIIf) 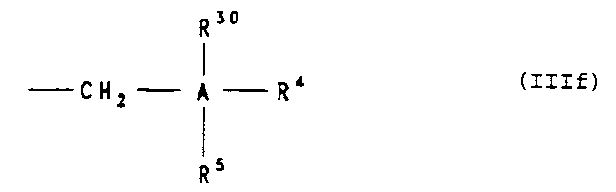 in which A is a five- or six-membered aromatic ring or a fused aromatic heterocycle containing 1 to 3 identical or different heteroatoms from the group consisting of nitrogen, oxygen and sulfur and the heterocycle is attached to the methylene group via a carbon atom,
R³⁰ and R⁴ are each a hydrogen atom, a C₁-C₄-alkyl, a C₂-C₄-alkenyl or an aryl group, aryl being phenyl which is unsubstituted or substituted by 1 to 4 radicals from the group consisting of C₁-C₆-alkyl, halogen, preferably F, Cl or Br, C₁-C₆-alkoxy, cyano, CONH₂ and COOR¹², R¹² being hydrogen or C₁-C₆-alkyl,
R³⁰ and R⁴ together can also form an aliphatic or aromatic ring,
R⁵ is a hydrogen atom, a C₁-C₄-alkyl, a C₁-C₃-hydroxyalkyl or a C₂-C₄-alkenyl group and
m is from 1 to 4, or in which
X is a group of the formula (IIIg) 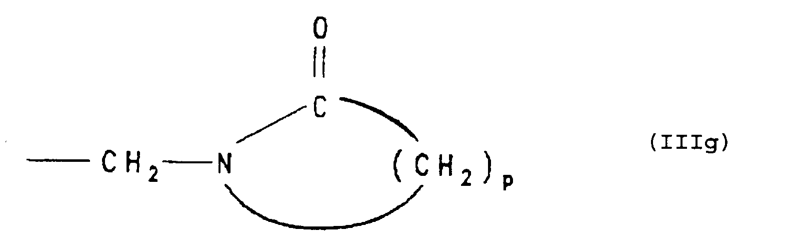 p being from 3 to 6 and m being from 1 to 4, or
X is a phthalimidomethylene group of the formula (IIIh) 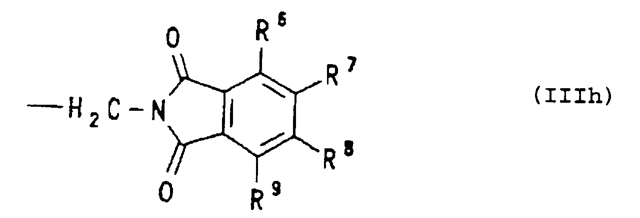 in which R⁶, R⁸ and R⁹ are identical or different and are each a hydrogen, fluorine, chlorine or bromine atom,
R⁷ is a hydrogen, fluorine, chlorine or bromine atom or a nitro, C₁-C₅-alkyl, C₁-C₆-alkoxy or benzoylamino group, and
m is from 1 to 4, or in which
X is an o-sulfobenzimidomethylene group of the formula (IIIi) 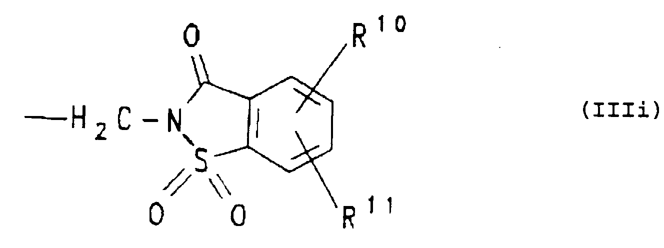 in which R¹⁰ and R¹¹ are identical or different and are each a hydrogen, chlorine or bromine atom or a C₁-C₄-alkyl, C₁-C₄-alkoxy or a nitro group, and
m is from 1 to 4, or in which
X is a group of the formula (IIIk) 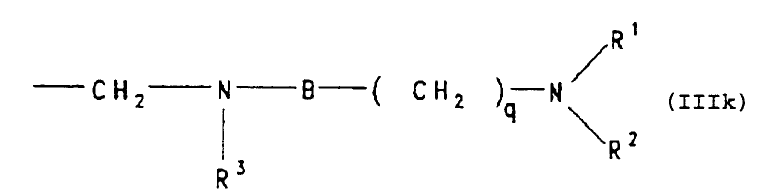 in which B is a carbonyl or sulfonyl group, and R¹, R² and R³ have the abovementioned meanings,
q is 1 or 2, and
m is from 1 to 4,
or there is added at least one pigment dispersant of the formula (I) containing various of the abovementioned radicals X in one molecule.

3. The process as claimed in claim 1 or 2, wherein grinding media of diameter 0.2 to 1.0 mm, preferably 0.3 to 0.5 mm, are used.

4. The process as claimed in at least one of claims 1 to 3, wherein the ratio of milling space to surface area of the milling space in the stirred ball mill is less than 0.15:1 (dm³:dm²).

5. The process as claimed in at least one of claims 1 to 4, wherein the pigment concentration in the mill base suspension is at most 40% by weight, preferably 10 to 35% by weight, in particular 10 to 20% by weight.

6. The process as claimed in at least one of claims 1 to 5, wherein the aqueous-organic medium is a solution of C₁-C₈-alkanols in water, preferably a solution of one or more butanols in water.

7. The process as claimed in at least one of claims 1 to 6, wherein a mixture of water and an organic solvent, preferably a C₁-C₈-alkanol, in particular a butanol, is used in the finishing treatment.

8. The process as claimed in at least one of claims 1 to 7, wherein highly crystalline crude copper phthalocyanine pigments of the α phase or β phase, which may additionally contain small amounts of carboxyl or sulfonyl groups, are used.

9. The process as claimed in at least one of claims 1 to 8, wherein highly crystalline crude halogenated copper phthalocyanine pigments are used.

10. The process as claimed in at least one of claims 1 to 9, wherein at least one compound of the formula (I) in which
P has the meaning shown in claim 2,
X is a phthalimidomethylene group of the formula (IIIh) 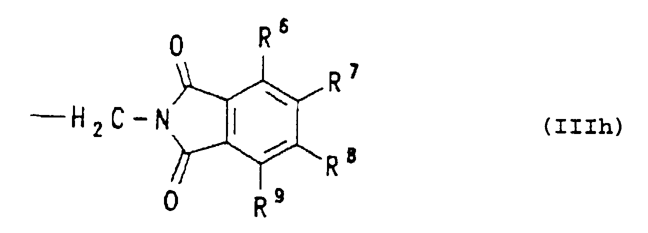
R⁶, R⁷, R⁸ and R⁹ each being a hydrogen atom and m being from 1 to 4, is used as the pigment dispersant.

11. The process as claimed in at least one of claims 1 to 9, wherein at least one compound of the formula (I) in which
P has the meaning shown in claim 2,
X is an o-sulfobenzimidomethylene group of the formula (IIIi) 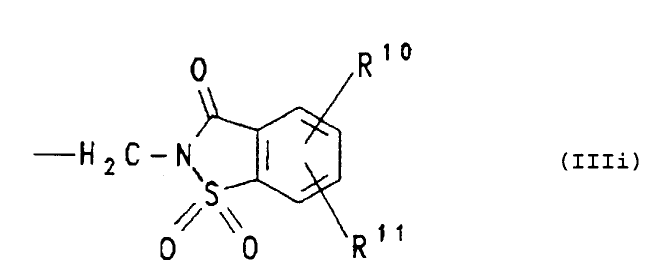
R¹⁰ and R¹¹ each being a hydrogen atom and m being from 1 to 4, is used as the pigment dispersant.

12. The process as claimed in at least one or more of claims 1 to 9, wherein at least one compound of the formula (I) in which
P has the meaning shown in claim 2,
X is a group of the formula (IIIf) 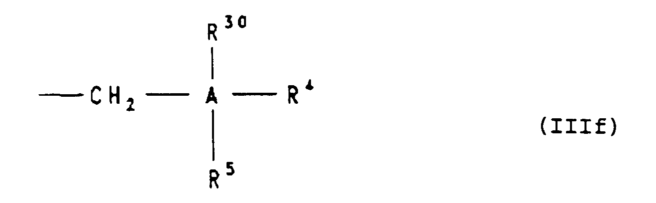
in which A is an imidazole, triazole or pyrazole radical and the heterocycle mentioned is attached to the methylene group via a carbon atom,
R³⁰ and R⁴ are each a hydrogen atom, a methyl, ethyl or C₂H₄-OH group or in which R³⁰ and R⁴ together form a phenyl ring,
R⁵ is a hydrogen atom, a C₁-C₄-alkyl, a C₁-C₃-hydroxyalkyl or a C₂-C₄-alkenyl group and m is from 1 to 4, is used as the pigment dispersant.

13. The process as claimed in at least one of claims 1 to 9, wherein at least one compound of the formula (I) in which
P has the meaning shown in claim 2,
X is a sulfonamido group of the formula (IIId) 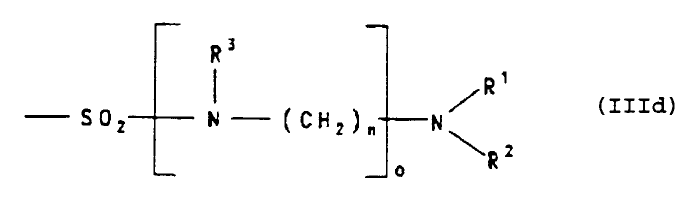
in which R¹ and R², independently of one another, are each a hydrogen atom, a methyl or ethyl group, or in which R¹ and R² together with the adjacent nitrogen atom form an imidazole, piperidine, piperazine, pyrrolidine, morpholine, imidazoline or hexamethyleneimine radical,
R³ is a hydrogen atom or a C₁-C₄-alkyl group,
n is 2 or 3,
o is 1, and
m is from 1 to 4, is used as the pigment dispersant.

14. The process as claimed in at least one of claims 1 to 9, wherein a mixture of different pigment dispersants of the formula (I) is used.

15. The process as claimed in at least one of claims 1 to 14, wherein the pigment dispersants of the formula (I) are present in amounts of 0.1 to 25% by weight, preferably 1 to 15% by weight, in particular 3 to 10% by weight, based on the phthalocyanine pigment used.

## Revendications

1. Procédé de préparation d'un pigment de phtalocyanine ou d'une préparation pigmentaire à base d'un pigment de phtalocyanine en obtenant la phase du pigment brut de phtalocyanine utilisé, caractérisé en ce que
a) d'abord l'on broie par voie humide dans un milieu liquide inerte dans un agitateur-broyeur à boulets que l'on exploite avec une puissance volumique supérieure à 2,5 kW par litre d'espace de broyage et une vitesse périphérique de l'agitateur supérieure à 12 m/sec, sous l'action des corps broyants avec un diamètre inférieur à 1 mm, le milieu liquide inerte étant, dans le cas de pigments de phtalocyanine de la phase β ou de pigments de phtalocyanine halogénés, un milieu organique ou aqueux-organique et, dans le cas de pigments de phtalocyanine de la phase α, un milieu aqueux, aqueux-organique ou organique, ne contenant pas de solvants aromatiques ; ensuite on soumet
b) la composition de prépigment obtenue au point a) soit
b1) sous forme de la suspension de la mouture ainsi obtenue, ou
b2) après l'ajout d'un solvant organique à la suspension de la mouture obtenue au point a), soit
b3) dans le cas d'un isolement intermédiaire du prépigment ou de la composition de prépigment, après une reprise préalable dans un solvant organique,
à un traitement de finition à température élevée, et
c) on isole ensuite le pigment ou la préparation pigmentaire résultante.

2. Procédé selon la revendication 1, caractérisé en ce que l'on ajoute avant, au cours ou après une ou plusieurs étapes partielles a), b) et c) en une seule fois ou à plusieurs reprises, au moins un dispersant de pigment de formule (I)
P - Xₘ (I)
dans laquelle P représente un reste m-valent à base de la formule (II) 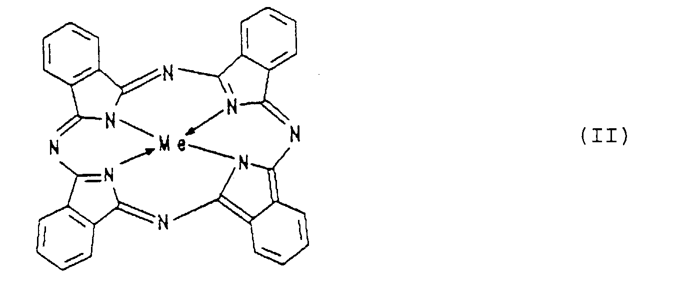 dans laquelle
m va de 1 à 6,
Me représente deux atomes d'hydrogène ou un atome de métal bivalent, de préférence un atome de cuivre, de fer, de zinc, de nickel, de cobalt ou d'étain, plus particulièrement un atome de cuivre, et
X représente un groupe de formule (IIIa)
-COOM (IIIa)
ou un groupe de formule (IIIb)
-SO₃M (IIIb)
dans laquelle M représente un atome d'hydrogène ou un équivalent d'un ion de métal alcalin, alcalino-terreux ou d'ammonium, ou dans laquelle
X est un groupe de formule (IIIc) 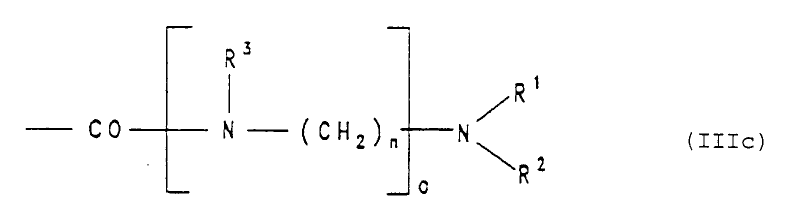 ou un groupe de formule (IIId) 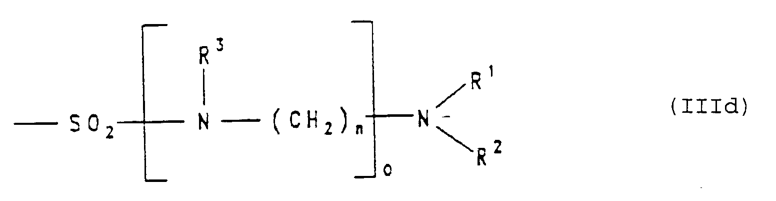 dans laquelle R¹ et R² sont identiques ou différents et représentent un atome d'hydrogène, un groupe alkyle en C₁-C₂₀, un groupe alcényle en C₂-C₂₀ ou un groupe cycloalkyle en C₅-C₇, ou dans laquelle R¹ et R² ensemble avec l'atome d'azote adjacent, forment un système hétérocyclique aliphatique ou aromatique à 5 à 7 chaînons avec à chaque fois 1 à 3 hétéroatomes identiques ou différents appartenant au cycle, de la famille des atomes d'azote, d'oxygène ou de soufre ;
R³ représente un atome d'hydrogène ou un groupe alkyle en C₁-C₄,
n va de 1 à 6,
o va de 0 ou 1, et
m va de 1 à 4, ou dans laquelle
X est un groupe aminométhylène de formule (IIIe) 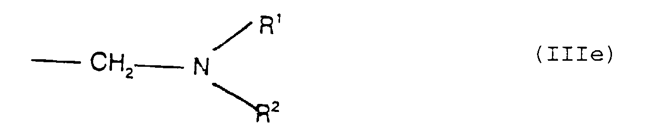 dans laquelle R¹ et R² ont la signification donnée ci-dessus et m va de 1 à 6, ou dans laquelle
X est un groupe de formule (IIIf) 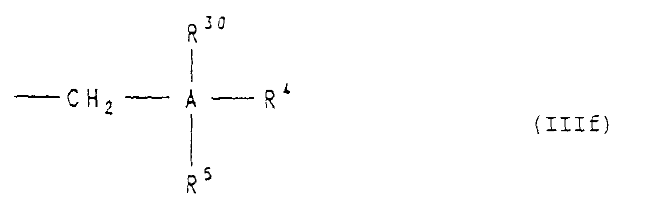 dans laquelle A représente un cycle aromatique à 5 ou 6 chaînons ou un hétérocycle aromatique condensé, qui comporte 1 à 3 hétéroatomes identiques ou différents de la famille des atomes d'azote, d'oxygène et de soufre et l'hétérocycle est relié au groupe méthylène par l'intermédiaire d'un atome de carbone,
R³⁰ et R⁴ représentent un atome d'hydrogène, un groupe alkyle en C₁-C₄ ou un groupe alcényle en C₂-C₄ ou un groupe aryle, aryle représentant un phényle non substitué ou substitué par 1 à 4 restes pris dans le groupe comportant des groupes alkyle en C₁-C₆, halogène, de préférence F, CI ou Br, alcoxy en C₁-C₆, cyano, CONH₂ et COOR¹², R¹² représentant un atome d'hydrogène ou un groupe alkyle en C₁-C₆,
R³⁰ et R⁴ ensemble pouvant former aussi un cycle aliphatique ou aromatique,
R⁵ représente un atome d'hydrogène, un groupe alkyle en C₁-C₄, un groupe hydroxyalkyle en C₁-C₃ ou un groupe alcényle en C₂-C₄, et
m va de 1 à 4, ou dans laquelle
X représente un groupe de formule (IIIg) 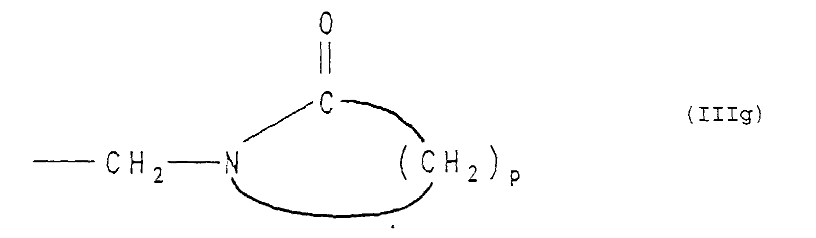 p allant de 3 à 6 et m va de 1 à 4, ou dans laquelle,
X représente un groupe phtalimidométhylène de formule (IIIh) 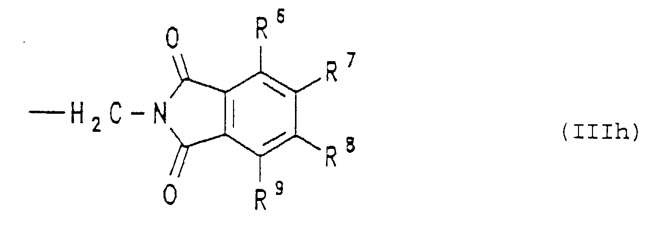 où R⁶, R⁸ et R⁹ sont identiques ou différents et représentent un atome d'hydrogène, de fluor, de chlore ou de brome,
R⁷ représente un atome d'hydrogène, de fluor, de chlore ou de brome ou un groupe nitro, alkyle en C₁-C₅, alcoxy en C₁-C₆ ou benzoylamino, et
m va de 1 à 4, ou dans laquelle
X est un groupe acide o-sulfobenzoimidométhylène de formule (IIIi) 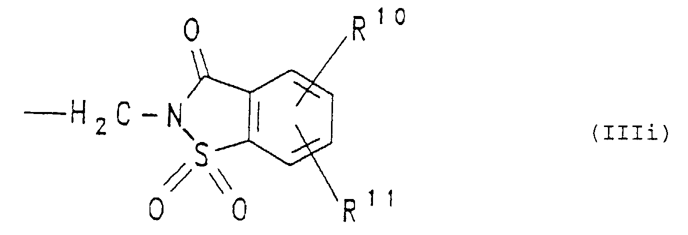 R¹⁰ et R¹¹ étant identiques ou différents, représentent un atome d'hydrogène, de chlore ou de brome ou un groupe alkyle en C₁-C₄, alcoxy en C₁-C₄, ou nitro, et
m va de 1 à 4, ou dans laquelle
X est un groupe de formule (IIIk) 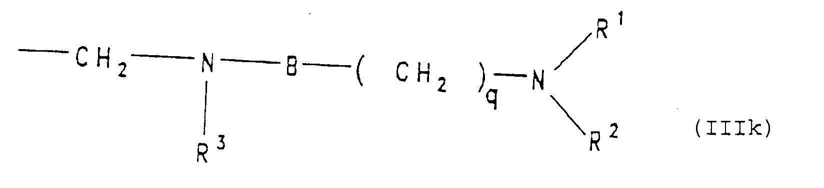 dans laquelle B est un groupe carbonyle ou sulfonyle, et R¹, R² et R³ ont la signification donnée ci-dessus,
q vaut 1 ou 2, et
m va de 1 à 4,
ou en ce que l'on ajoute au moins un dispersant de pigment de formule (I) qui contient dans une molécule les différents restes X indiqués précédemment.

3. Procédé selon la revendication 1 ou 2, caractérisé en ce que l'on utilise des corps broyants d'un diamètre de 0,2 à 1,0 mm, de préférence de 0,3 à 0,5 mm.

4. Procédé selon au moins l'une des revendications 1 à 3, caractérisé en ce que dans l'agitateur-broyeur à boulets, le rapport de l'espace de broyage à la surface de l'espace de broyage est inférieur à 0,15:1 (dm³:dm²).

5. Procédé selon au moins l'une des revendications 1 à 4, caractérisé en ce que la concentration en pigment dans la suspension de la mouture est de 40 % en poids au maximum, de préférence de 10 à 35 % en poids, plus particulièrement de 10 à 20 % en poids.

6. Procédé selon au moins l'une des revendications 1 à 5, caractérisé en ce que le milieu aqueux-organique est une solution aqueuse d'alcanol en C₁-C₈, de préférence une solution aqueuse d'un ou plusieurs butanols.

7. Procédé selon au moins l'une des revendications 1 à 6, caractérisé en ce que l'on utilise dans le traitement de finition un mélange d'eau et d'un solvant organique, de préférence d'un alcanol en C₁-C₈, en particulier d'un butanol.

8. Procédé selon au moins l'une des revendications 1 à 7, caractérisé en ce que l'on utilise des pigments bruts de phtalocyanine de cuivre hautement cristallins de la phase α ou β, qui contiennent éventuellement encore de petites quantités de groupes acide carboxylique ou acide sulfonique.

9. Procédé selon au moins l'une des revendications 1 à 8, caractérisé en ce que l'on utilise des pigments bruts de phtalocyanine de cuivre halogénés hautement cristallins.

10. Procédé selon au moins l'une des revendications 1 à 9, caractérisé en ce que l'on utilise comme dispersant de pigment au moins un composé de formule (I), dans laquelle
P possède la signification indiquée dans la revendication 2,
X représente un groupe phtalimidométhylène de formule (IIIh) 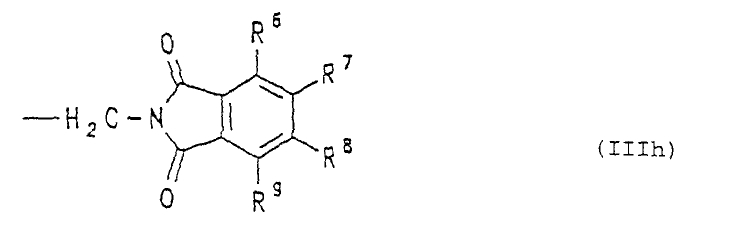
R⁶, R⁷, R⁸ et R⁹ chacun représente un atome d'hydrogène et m va de 1 à 4.

11. Procédé selon au moins l'une des revendications 1 à 9, caractérisé en ce que l'on utilise en tant que dispersant de pigment au moins un composé de formule (I), dans laquelle
P possède la signification indiquée dans la revendication 2,
X représente un groupe acide o-sulfobenzoimidométhylène de formule (IIIi) 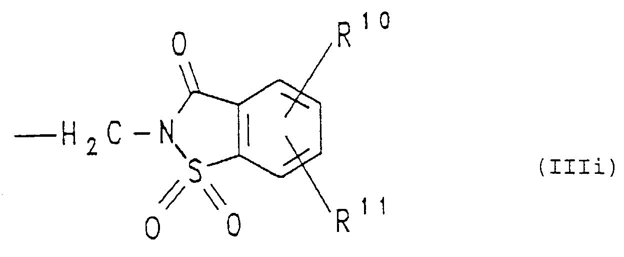
R¹⁰ et R¹¹ chacun représentant un atome d'hydrogène et m allant de 1 à 4.

12. Procédé selon au moins une ou plusieurs des revendications 1 à 9, caractérisé en ce que l'on utilise en tant que dispersant de pigment au moins un composé de formule (I), dans laquelle
P possède la signification donnée dans la revendication 2,
X représente un groupe de formule (IIIf) 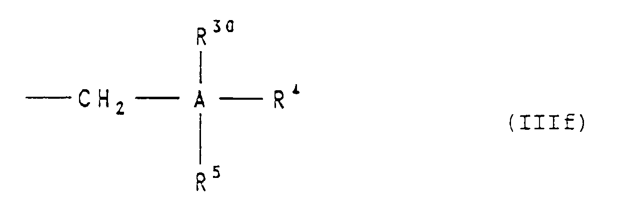
dans laquelle A représente un reste imidazole, triazole ou pyrazole, et l'hétérocycle cité étant lié au groupe méthylène par l'intermédiaire d'un atome de carbone,
R³⁰ et R⁴ étant un atome d'hydrogène, un groupe méthyle, éthyle ou C₂H₄-OH, ou R³⁰ et R⁴ forment ensemble un cycle phényle,
R⁵ représentant un atome d'hydrogène, un groupe alkyle en C₁-C₄, un groupe hydroxyalkyle en C₁-C₃ ou un groupe alcényle en C₂-C₄, et m allant de 1 à 4.

13. Procédé selon au moins l'une des revendications 1 à 9, caractérisé en ce que l'on utilise en tant que dispersant de pigment au moins un composé de formule (I), dans laquelle
P possède la signification donnée dans la revendication 2,
X représente un groupe sulfonamido de formule (IIId) 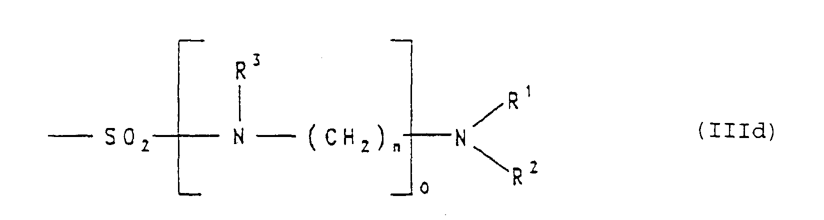
dans laquelle R¹ et R², indépendamment l'un de l'autre, représentent chacun un atome d'hydrogène, un groupe méthyle ou éthyle, ou dans laquelle R¹ et R² ensemble avec l'atome d'azote adjacent, forment un reste imidazole, pipéridine, pipérazine, pyrrolidine, morpholine, imidazoline ou hexaméthylènimine,
R³ représente un atome d'hydrogène ou un groupe alkyle en C₁-C₄,
n vaut 2 ou 3,
o vaut 1, et
m va de 1 à 4.

14. Procédé selon au moins l'une des revendications 1 à 9, caractérisé en ce que l'on utilise un mélange de différents dispersants de pigment de formule (I).

15. Procédé selon au moins l'une des revendications 1 à 14, caractérisé en ce que les dispersants de pigment de formule (I) sont présents dans une quantité de 0,1 à 25 % en poids, de préférence de 1 à 15 % en poids, plus particulièrement de 3 à 10 % en poids, par rapport au pigment de phtalocyanine utilisé.
